(19) **Europäisches Patentamt / European Patent Office / Office européen des brevets**

(11) **EP 3 605 264 B1**

(12) # EUROPEAN PATENT SPECIFICATION

(45) Date of publication and mention of the grant of the patent:
**04.08.2021 Bulletin 2021/31**

(21) Application number: **18778088.7**

(22) Date of filing: **15.03.2018**

(51) Int Cl.:
**G05D 1/02** *(2020.01)*     **G01C 21/32** *(2006.01)*

(86) International application number:
**PCT/CN2018/079134**

(87) International publication number:
**WO 2018/177131 (04.10.2018 Gazette 2018/40)**

(54) **METHOD AND DEVICE FOR DETERMINING LANE CENTER LINE**

VERFAHREN UND VORRICHTUNG ZUR BESTIMMUNG DER MITTELLINIE EINER FAHRSPUR

PROCÉDÉ ET DISPOSITIF PERMETTANT DE DÉTERMINER UNE LIGNE CENTRALE DE VOIE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **31.03.2017 CN 201710209738**

(43) Date of publication of application:
**05.02.2020 Bulletin 2020/06**

(73) Proprietor: **Tencent Technology (Shenzhen) Company Limited**
**Shenzhen, Guangdong 518057 (CN)**

(72) Inventors:
• **CHEN, Si**
**Shenzhen, Guangdong 518057 (CN)**

• **ZENG, Chao**
**Shenzhen, Guangdong 518057 (CN)**

(74) Representative: **Witte, Weller & Partner Patentanwälte mbB**
**Postfach 10 54 62**
**70047 Stuttgart (DE)**

(56) References cited:
**CN-A- 104 700 617**    **CN-A- 105 667 518**
**CN-A- 105 957 342**    **US-A1- 2010 312 527**
**US-A1- 2012 130 637**    **US-A1- 2013 328 916**
**US-A1- 2015 367 778**

• **E. UDUWARAGODA ET AL: "Generating lane level road data from vehicle trajectories using Kernel Density Estimation", 16TH INTERNATIONAL IEEE CONFERENCE ON INTELLIGENT TRANSPORTATION SYSTEMS (ITSC 2013), 9 October 2013 (2013-10-09), pages 384-391, XP055484997, ISSN: 2153-0009, DOI: 10.1109/ITSC.2013.6728262**

**Description**

This application claims priority to Chinese Patent Application No. 201710209738.2, titled "LANE CENTER LINE DETERMINING METHOD AND APPARATUS" filed with the Chinese Patent Office on March 31, 2017.

FIELD OF THE TECHNOLOGY

Embodiments of the present disclosure relate to the technical field of intelligent traffic, and in particular to a lane center line determining method and apparatus.

BACKGROUND OF THE DISCLOSURE

High-precision maps have been gradually advancing in the field of intelligent transportation technologies including driver assistance and unmanned driving. In a high-precision map, a lane center line having a complete topology connection is important information required by an unmanned driving system. The lane center line does not truly exist in an actual road, and cannot be obtained directly through detection of a sensor.

The lane center line is a characteristic line formed by sequentially connecting center points in a lane width direction, from a starting point to an ending point of a lane. The lane center line can reflect a curvature change of the lane, and may be used as a sign line for vehicle travelling.

In US2010/312527A1, a method is disclosed for representing road lanes as data in a database that can be used by a system in a vehicle to provide a safety-related function. Each data representation of a physical road lane includes data indicating start and end points of the represented lane and other data attributes pertaining to the represented lane, including data indicating what physical features are adjacent to the represented lane on right and left sides thereof and data indicating a geometry of the represented lane. Further, at least some of the data representations of lanes are associated with data representations of sublanes. Each data representation of a sublane includes data indicating start and end points thereof, defined relative to the lane of which the sublane is a part. A data representation of a sublane includes at least one data attribute associated therewith that pertains to the represented sublane and that is different than the same attribute of the lane of which the sublane is a part. The database is compatible with navigation-related applications that use a different data model to provide navigation-related function.

In "Generating lane level road data from vehicle trajectories using Kernel Density Estimation" (E.UDUWARAGODA ET AL.), 16TH INTERNATIONAL IEEE CONFERENCE ON INTELLIGENT TRANSPORTATION SYSTEMS (ITSC 2013), 9 October 2013, an informative digital map is a prerequisite for future Intelligent Transportation System (ITS) applications such as lane level navigation systems. Preparing and updating such detailed digital maps by using existing methods such as surveying and image digitization is not practical due to the time and cost involved. A method is proposed that statistically mines Global Positioning System (GPS) trajectory data obtained from vehicles to generate a lane level digital map of the road. The proposed method is capable of generating a digital map of the road which contains lane centerlines. The proposed method is independent of the lane width, lane parallelism and can handle lane splits and merges. In addition, a method that can be used to generate a map of lane boundaries is also presented. The proposed methods have been tested using the GPS data collected using vehicles equipped with GPS enabled mobile phones. Results show that the proposed method for lane centerline generation is successful in different road geometries.

SUMMARY

According to embodiments of the present disclosure, a lane center line determining method and apparatus are provided, so as to accurately determine a lane center line. The technical solutions are as follows.

According to an embodiment of the present disclosure, a lane center line determining method is provided, which includes:

obtaining, by a server, a target lane in a first road segment from a database, where the first road segment indicates a road segment having a changed lane number, the target lane indicates an added or subtracted lane, two side lane lines of the target lane are respectively connected to two side lane lines of a first lane at two endpoints of a first end of the target lane, the two side lane lines of the target lane intersect at an intersection point at a second end of the target lane and the intersection point is connected to a side lane line of a second lane;

obtaining, by the server, related information of the target lane from the database, where the related information includes: locations of the two endpoints of the first end of the target lane, a location of the intersection point at the second end of the target lane, and a location of a lane center point of a neighboring lane of the target lane;

determining, by the server for the first end of the target lane, a midpoint of the two endpoints of the first end of the target lane, as a center endpoint of the first end of the target lane;

determining, by the server for the second end of the target lane, the lane center point of the neighboring lane of the target lane as a center endpoint of the second end of the target lane, where the lane center point of the neighboring lane is a midpoint between the intersection point and a mapping point of the intersection point, the intersection point and the mapping point of the intersection point are respectively located on two side lane lines of the neighboring lane, and a connecting line between the intersection point and the mapping point of the intersection point is perpendicular to a travelling direction of the neighboring lane;

determining, by the server, a lane center line of the target lane by using the center endpoint of the first end of the target lane and the center endpoint of the second end of the target lane as two endpoints of the lane center line of the target lane; and

storing information of the two endpoints of the determined lane center line and the target lane in the database.

According to an embodiment of the present disclosure, a server is further provided. The server includes: a processor and a memory connected to the processor. The memory stores machine-readable instruction modules that can be executed by the processor; and the machine-readable instruction modules include: a receiving module and a sending module.

The receiving module is configured to receive location information sent by user equipment, and obtain, according to the location information, navigation data of a road segment corresponding to the location information from a database. The navigation data includes information of a lane center line of a target lane in the road segment. The number of lanes in the road segment changes, the lane center line of the target lane in the road segment is determined by the server according to the foregoing method, and the target lane indicates an added or subtracted lane.

The sending module is configured to return the navigation data of the road segment to the user equipment.

According to an embodiment of the present disclosure, a non-volatile computer-readable storage medium is further provided. The storage medium stores machine-readable instructions, and the machine-readable instructions are executed by a processor to perform the foregoing method.

BRIEF DESCRIPTION OF THE DRAWINGS

To describe the technical solutions in the embodiments of the present disclosure more clearly, the accompanying drawings required for describing the embodiments are described briefly hereinafter. Apparently, the accompanying drawings in the following description show merely some embodiments of the present disclosure, and a person of ordinary skill in the art can still derive other drawings from these accompanying drawings without creative efforts.

FIG.1A is a schematic diagram of a road scenario according to an embodiment of the present disclosure;

FIG.1B is a diagram of a network scenario for a lane center line determining method according to an embodiment of the present disclosure;

FIG.2 is a flowchart of a lane center line determining method according to an embodiment of the present disclosure;

FIG.3 is a schematic diagram of a road;

FIG.4 is a schematic diagram of another road;

FIG.5 is a schematic diagram of determining a lane center line by constructing a Bezier curve;

FIG.6 is a flowchart of a lane center line determining method according to another embodiment of the present disclosure;

FIG.7 is a schematic diagram of determining a lane center line of a non-target lane;

FIG.8 is a flowchart of a connection method for a lane center line at an intersection according to an embodiment of the present disclosure;

FIG.9 is a schematic diagram of a search area;

FIG.10 is a schematic diagram of a direction rotation angle and a location included angle;

FIG.11 is a schematic diagram of determining a travelling path by constructing a Bezier curve;

FIG.12A is a flowchart of a lane center line determining method according to an embodiment of the present disclosure;

FIG.12B is a schematic structural diagram of a server according to an embodiment of the present disclosure;

FIG.13 is a block diagram of a lane center line determining apparatus according to an embodiment of the present disclosure; and

FIG.14 is a schematic structural diagram of a server according to an embodiment of the present disclosure.

## DESCRIPTION OF EMBODIMENTS

To make objectives, technical solutions, and advantages of the present disclosure clearer, implementations of the present disclosure are further described in detail with reference to the accompanying drawings hereinafter.

Before the embodiments of the present disclosure are introduced and described, some terms related to the embodiments of the present disclosure are first defined and described.

Road: refers to an entire roadway between two neighboring intersections.

Lane: refers to a part of a roadway for travelling of vehicles in a single longitudinal column. One road includes one or more lanes.

Lane lines: refer to left and right boundaries on two sides of a lane.

Road segment: refers to an entire road or a part of a road. One road may be divided into multiple road segments along a direction perpendicular to a travelling direction, and the road segments are successively connected.

Intersection: refers to an end of a road or a place at which roads intersect. One intersection may be in communication with multiple roads.

In the embodiments of the present disclosure, steps may be performed by a server. For example, the server may be a server, a server cluster including multiple servers, or a cloud computing service center. In some embodiments, the server determines a lane center line of each lane by using lane line coordinate data in a high-precision map as an input; and the server determines, by using the lane center line of each lane and lane travelling direction attribute data as an input, a connecting line of the lane center line at an intersection. In the foregoing manner, the server obtains, through automatic connection and calculation, lane center line coordinate data having a complete topology connection, thereby providing a travelling path having a guiding significance for advanced driver assistance or unmanned driving.

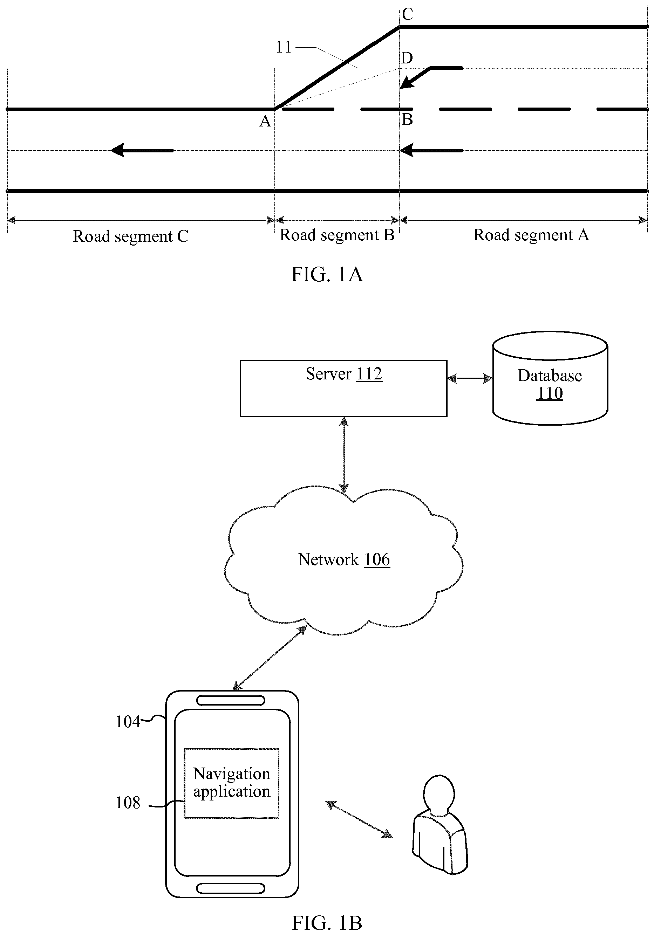

FIG.1A shows a road scenario to which an embodiment of the present disclosure is applied. As shown in FIG.1A, a geometrical center line of two side lane lines of a lane may directly function as a lane center line. The lane lines refer to left and right boundaries of the lane. With reference to FIG.1A, a travelling direction of the road is from right to left. A lane line of each lane is indicated by a relatively thick solid line or dashed line in the FIG.1A. For a road segment having an unchanged lane number (such as a road segment A and a road segment C shown in FIG.1A), a geometrical center line of two side lane lines of a lane functions as a lane center line, and the lane center line is provided to an unmanned driving vehicle. The unmanned driving vehicle travels along the lane center line, thereby satisfying an actual travelling requirement. However, for a road segment having a changed lane number (such as a road segment B shown in FIG.IA), if a geometrical center line of two side lane lines of a lane functions as a lane center line and is provided to an unmanned driving vehicle, the unmanned driving vehicle travels along the lane center line. In this case, an actual travelling requirement cannot be satisfied. Specifically, the road segment C is reached from the road segment A through the road segment B, the number of lanes is reduced from two to one. A lane 11 in the road segment B is a subtracted lane. Two side lane lines of the lane 11 are AB and AC, a geometrical center line of AB and AC is AD, and D is a midpoint of a line segment BC. If AD functions as a lane center line of the lane 11 and when travelling along this lane center line, an unmanned driving vehicle may get contact with a curb at a point A. Moreover, AD and a lane center line of the road segment C are discontinuous. Therefore, the unmanned driving vehicle cannot smoothly pull in to the road segment C.

Therefore, for an added or subtracted lane in a road segment having a changed lane number, a lane center line determined in the foregoing manner is inaccurate, and thus cannot be used as a guiding travelling path to be provided to an unmanned driving vehicle. If a lane center line is determined in a manual editing manner, a lot of time and effort are taken.

FIG.1B is a schematic diagram of a network scenario according to an embodiment of the present disclosure. As shown in FIG.1B, user equipment 104 of a user may be connected to a server 112 over a network 106. In some embodiments, the user is connected to the server 112 by using a navigation application 108 executed on the user equipment 104.

The server 112 maintains a database 110, and the database 110 stores navigation data, used to provide a navigation service to the user equipment 104.

In some embodiments, an example of the user equipment 104 includes but is not limited to a smartphone, a palmtop computer, a wearable computing device, a personal digital assistant (PDA), a tablet computer, a notebook computer, or a combination of any two or more of these data processing devices or other data processing devices.

In some embodiments, the network 106 may include a local area network (LAN) and a wide area network (WAN) such as the Internet. The network 106 may be implemented by using any well-known network protocol, including various wired or wireless protocols.

In some embodiments, the server 112 may be implemented on one or more independent data processing apparatuses or distributed computer networks.

In some embodiments, the server 112 may obtain, from the database 110, a target lane in a first road segment having a changed lane number and related information of the target lane. The target lane refers to an added or subtracted lane, two side lane lines of the target lane are respectively connected to two side lane lines of a first lane at two endpoints of a first end of the target lane, the two side lane lines of the target lane intersect at an intersection point at a second end of the target lane and the intersection point is connected to a side lane line of a second lane. The related information includes: locations of the two endpoints of the first end of the target lane, a location of the intersection point at the second end of the target lane, and a location of a lane center point of a neighboring lane of the target lane. The server 112 determines, for the first end of the target lane, a midpoint of the two endpoints of the first end of the target lane as a center endpoint of the first end of the target lane. The server 112 determines, for the second end of the target lane, the lane center point of the neighboring lane of the target lane as a center endpoint of the second end of the target lane. The lane center point of the neighboring lane is a midpoint between the intersection point and a mapping point of the intersection point, the intersection point and the mapping point of the intersection point are respectively located on two side lane lines of the neighboring lane, and a connecting line between the intersection point and the mapping point of the intersection point is perpendicular to a travelling direction of the neighboring lane. The server 112 determines a lane center line of the target lane by using the center endpoint of the first end of the target lane and the center endpoint of the second end of the target lane as two endpoints of the lane center line of the target lane; and stores information of the two endpoints of the determined lane center line and the target lane in the database 110.

Therefore, when the user equipment 104 requests to obtain navigation data of the first road segment from the server 112, the server may query the database 110, and send the corresponding navigation data stored in the database 110 to the user equipment 104.

For an added or subtracted lane in a road segment having a changed lane number, a lane center line of the lane is determined by using the solution provided in the embodiment of the present disclosure, and it can be ensured that a lane center line of the lane and a lane center line of a lane connected to the lane are continuous, thereby improving accuracy of determining the lane center line. Moreover, with the solution provided in the embodiment of the present disclosure, computing is performed automatically without manual intervention, thereby fully improving the efficiency of determining the lane center line.

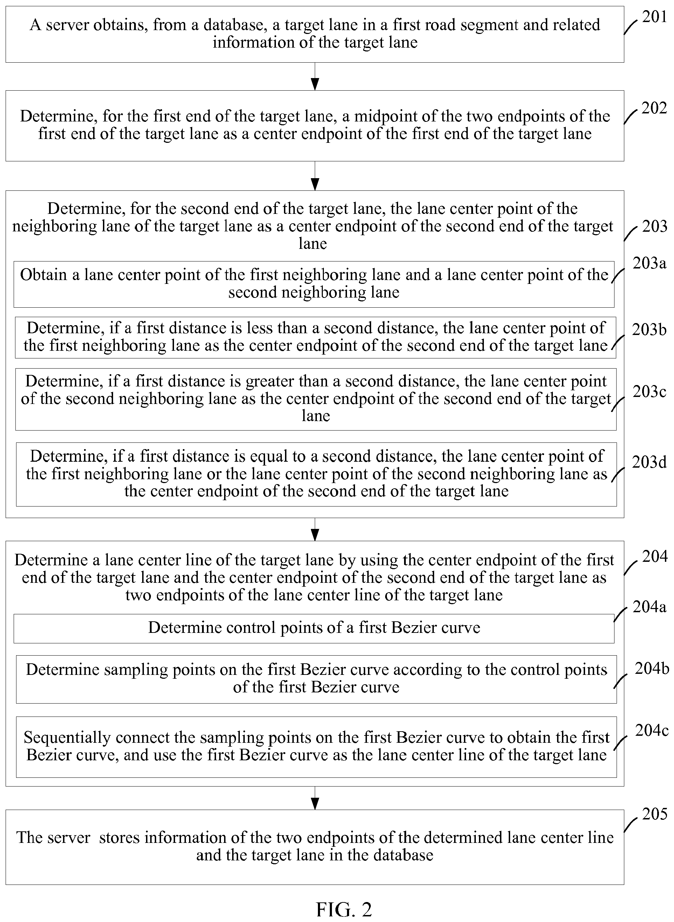

Reference is made to FIG.2 which is a flowchart of a lane center line determining method according to an embodiment of the present disclosure. The method may include the following steps 201 to 205.

In step 201, a server obtains, from a database, a target lane in a first road segment and related information of the target lane.

The first road segment is a road segment having a changed lane number. That is, two side neighboring road segments connected to the first road segment have different lane numbers. It is assumed that the two side neighboring road segments connected to the first road segment are a left neighboring road segment and a right neighboring road segment, and a travelling direction is from left to right. That is, a vehicle sequentially passes through the left neighboring road segment, the first road segment and the right neighboring road segment. In a case that the first road segment is a road segment having an increased lane number, the number of lanes of the left neighboring road segment is less than the number of lanes of the right neighboring road segment. In a case that the first road segment is a road segment having a reduced lane number, the number of lanes of the left neighboring road segment is greater than the number of lanes of the right neighboring road segment. In an example, the left neighboring road segment of the first road segment includes one lane, the right neighboring road segment of the first road segment includes two lanes, and in the first road segment, the number of lanes is increased from one to two. In another example, the left neighboring road segment of the first road segment includes three lanes, the right neighboring road segment of the first road segment includes two lanes, and in the first road segment, the number of lanes is reduced from three to two.

The target lane refers to an added or subtracted lane. Two side lane lines of the target lane are respectively connected to two side lane lines of a first lane at two endpoints of a first end of the target lane. The two side lane lines of the target lane intersect at an intersection point at a second end of the target lane and the intersection point is connected to a side lane line of a second lane.

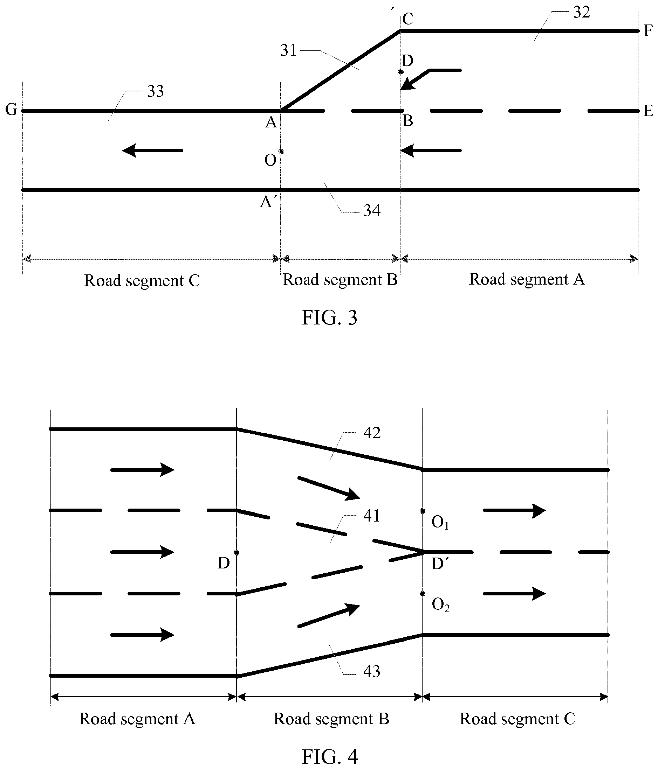

Using a road shown in FIG.3 as an example, a travelling direction of the road is from right to left, and a lane line of each lane is indicated by using a relatively thick solid line or dashed line in the FIG.3. In FIG.3, a road segment B belongs to a first road segment (that is, a road segment having a changed lane number), and the road segment B includes a target lane 31 (that is, a lane subtracted in the road segment B). Two side lane lines of the target lane 31 are AB and AC. In FIG.3, a right end of the target lane 31 is a first end of the target lane 31, and a left end of the target lane 31 is a second end of the target lane 31. Two endpoints of the two side lane lines AB and AC of the target lane 31 at the first end of the target lane 31 are respectively a point B and a point C, and the point B and the point C are respectively connected to two side lane lines BE and CF of a first lane 32. The two side lane lines AB and AC of the target lane 31 intersect at a point A at the second end of the target lane 31, and the point A is connected to a side lane line AG of a second lane 33.

Actually, a lane line may be absent in the first road segment. As shown in FIG.3, the lane line AB may be absent in the road segment B. The server determines the target lane according to lane lines in the first road segment, if there is a lane line in the first road segment. The server supplements, if a lane line is absent in the first road segment, the lane line absent in the first road segment according to lane lines of two side neighboring road segments connected to the first road segment; and then determines the target lane according to lane lines in the first road segment.

In an example, the lane line absent in the first road segment is supplemented in the following manner. For any first lane line endpoint, a second lane line endpoint at a shortest distance from the first lane line endpoint is selected if a lane line connected to the first lane line endpoint is absent in the first road segment, and the first lane line endpoint is connected to the selected second lane line endpoint to form a lane line. The first lane line endpoint is an endpoint of a lane line in a first neighboring road segment close to the first road segment, the second lane line endpoint is an endpoint of a lane line in a second neighboring road segment close to the first road segment, and the number of lanes of the first neighboring road segment is greater than the number of lanes of the second neighboring road segment.

The related information of the target lane includes: locations of the two endpoints of the first end of the target lane, a location of the intersection point at the second end of the target lane, and a location of a lane center point of a neighboring lane of the target lane.

In some embodiments, the neighboring lane is a lane that is closest to the target lane and is located on a left side of the target lane, and/or a lane that is closest to the target lane and is located on a right side of the target lane, where both the lane and the target lane belong to the first road segment.

In step 202, for the first end of the target lane, a midpoint of the two endpoints of the first end of the target lane is determined as a center endpoint of the first end of the target lane.

With reference to FIG.3, a midpoint between the point B and the point C is a point D, and the point D is a center endpoint of the first end of the target lane 31.

In step 203, for the second end of the target lane, the lane center point of the neighboring lane of the target lane is determined as a center endpoint of the second end of the target lane.

The lane center point of the neighboring lane is a midpoint between the intersection point (the intersection point of the two side lane lines of the target lane introduced above) and a mapping point of the intersection point. The intersection point and the mapping point of the intersection point are respectively located on two side lane lines of the neighboring lane, and a connecting line between the intersection point and the mapping point of the intersection point is perpendicular to a travelling direction of the neighboring lane.

Both the neighboring lane of the target lane and the target lane belong to the first road segment. The neighboring lane of the target lane includes: a lane that is closest to the target lane and is located on a left side of the target lane, and/or a lane that is closest to the target lane and is located on a right side of the target lane.

With reference to FIG.3, a neighboring lane of the target lane 31 is indicated by 34. A travelling direction of the neighboring lane 34 is from right to left. A mapping point of the point A is a point A', a midpoint between the point A and the point A' is a point O, and the point O is a center endpoint of the second end of the target lane 31.

There may be one or two neighboring lanes of the target lane. In a case that there is only one neighboring lane of the target lane, a lane center point of the neighboring lane is the center endpoint of the second end of the target lane. In a case that there are two neighboring lanes of the target lane, the center endpoint of the second end of the target lane is determined in the following manner.

Assuming that neighboring lanes of the target lane include: a first neighboring lane and a second neighboring lane, step 203 may include the following substeps 203a to 203d.

In step 203a, a lane center point of the first neighboring lane and a lane center point of the second neighboring lane are obtained.

In step 203b, if a first distance is less than a second distance, the lane center point of the first neighboring lane is determined as the center endpoint of the second end of the target lane.

In step 203c, if the first distance is greater than the second distance, the lane center point of the second neighboring lane is determined as the center endpoint of the second end of the target lane.

In step 203d, if the first distance is equal to the second distance, the lane center point of the first neighboring lane or the lane center point of the second neighboring lane is determined as the center endpoint of the second end of the target lane.

The first distance refers to a distance between the center endpoint of the first end of the target lane and the lane center point of the first neighboring lane, and the second distance refers to a distance between the center endpoint of the first end of the target lane and the lane center point of the second neighboring lane.

Using a road shown in FIG.4 as an example, a travelling direction of the road is from left to right, and a lane line of each lane is indicated by using a relatively thick solid line or dashed line in the FIG.4. In FIG.4, a road segment B is a first road segment (that is, a road segment having a changed lane number), and the road segment B includes a target lane 41 (that is, a lane subtracted in the road segment B). The target lane 41 includes two neighboring lanes, namely, a neighboring lane 42 and a neighboring lane 43 shown in FIG.4. A lane center point of the neighboring lane 42 is a point O1, a lane center point of the neighboring lane 43 is a point O2, and a center endpoint of a first end of the target lane 41 is a point D. Therefore, a first distance is a distance between the point D and the point O1, and a second distance is a distance between the point D and the point O2.

For example, the first distance and the second distance may be determined by using the following possible implementations.

In a first possible implementation, the first distance is calculated directly according to coordinates of the center endpoint of the first end of the target lane and coordinates of the lane center point of the first neighboring lane; and the second distance is calculated directly according to coordinates of the center endpoint of the first end of the target lane and coordinates of the lane center point of the second neighboring lane.

In a second possible implementation, a vertical point of the center endpoint of the first end of the target lane on a connecting line between the lane center point of the first neighboring lane and the lane center point of the second neighboring lane is obtained. A distance (indicated as "a third distance") between the vertical point and the lane center point of the first neighboring lane, and a distance (indicated as "a fourth distance") between the vertical point and the lane center point of the second neighboring lane are respectively obtained. If the third distance is less than the fourth distance, it is determined that the first distance is less than the second distance. If the third distance is greater than the fourth distance, it is determined that the first distance is greater than the second distance. If the third distance is equal to the fourth distance, it is determined that the first distance is equal to the second distance. For example, with reference to FIG.4, it is assumed that a vertical point of the point D on a line segment O1O2 is D'. If $|D'O_1|<|D'O_2|$, $|DO_1|<|DO_2|$; if $|D'O_1|<|D'O_2|$, $|DO_1|<|DO_2|$ ; or if $|D'O_1|<|D'O_2|$ , $|DO_1|<|DO_2|$. The foregoing symbol | | indicates a distance between two points.

In a third possible implementation, a sampling point is obtained on the lane center line of the first lane. An intersection point between an extension line of a connecting line between the sampling point and the center endpoint of the first end of the target lane and a connecting line between the lane center point of the first neighboring lane and the lane center point of the second neighboring lane is obtained. A distance (indicated as "a fifth distance") between the intersection point and the lane center point of the first neighboring lane, and a distance (indicated as "a sixth distance") between the intersection point and the lane center point of the second neighboring lane are respectively obtained. If the fifth distance is less than the sixth distance, it is determined that the first distance is less than the second distance. If the fifth distance is greater than the sixth distance, it is determined that the first distance is greater than the second distance. If the fifth distance is equal to the sixth distance, it is determined that the first distance is equal to the second distance.

It should be noted that, in the embodiment of the present disclosure, a travelling direction of a neighboring lane of the target lane refers to a travelling direction of an entire road to which the neighboring lane belongs. For example, the travelling direction of the neighboring lane 34 of the target lane 31 in FIG.3 is from right to left, and a travelling direction of the neighboring lanes 42 and 43 of the target lane 41 in FIG.4 is from left to right.

In step 204, a lane center line of the target lane is determined by using the center endpoint of the first end of the target lane and the center endpoint of the second end of the target lane as two endpoints of the lane center line of the target lane.

In a possible implementation, a straight line connecting the center endpoint of the first end of the target lane to the center endpoint of the second end of the target lane functions as the lane center line of the target lane.

In another possible implementation, a curve connecting the center endpoint of the first end of the target lane to the center endpoint of the second end of the target lane functions as the lane center line of the target lane.

In an example, the lane center line of the target lane is determined by constructing a Bezier curve. Step 204 includes the following substeps 204a to 204c.

In step 204a, control points of a first Bezier curve are determined.

The control points of the first Bezier curve include $P_0$, $P_1$, $P_2$ and $P_3$, $P_0$ is the center endpoint of the first end of the target lane, $P_3$ is the center endpoint of the second end of the target lane, a coordinate of $P_1$ is

$$P_1 = A_1 + k_1(A_1 - A_3)\frac{|A_1B_1|}{|A_1A_3|} \text{ ,}$$

and a coordinate of $P_2$ is

$$P_2 = B_1 + k_1(B_1 - B_3)\frac{|A_1B_1|}{|B_1B_3|} \text{ .}$$

$A_1$ coincides with $P_0$, and $A_3$ is located on the lane center line $A_1A_2$ of the first lane. For example, $A_3$ is a sampling point being closest

to $A_1$ on the lane center line $A_1A_2$ of the first lane. $B_1$ coincides with $P_3$, and $B_3$ is located on the lane center line $B_1B_2$ of the second lane. For example, $B_3$ is a sampling point being closest to $B_1$ on the lane center line $B_1B_2$ of the second lane. $|A_1B_1|$ indicates the length of the line segment $A_1B_1$, $|A_1A_3|$ indicates the length of the line segment $A_1A_3$, $|B_1B_3|$ indicates the length of the line segment $B_1B_3$, where $k_1$ is a preset constant. A value of $k_1$ may be obtained according to practical experience. For example, the value of $k_1$ ranges from 0.2 to 0.7.

In step 204b, sampling points on the first Bezier curve are determined based on the control points of the first Bezier curve.

A coordinate $C_i$ of an i-th sampling point on the first Bezier curve is indicated by:

$$C_i=P_0t^3+3P_1t^2(1-t)+3P_2t(1-t)^2+P_3(1-t)^3,$$

where $t=\dfrac{i-1}{n-1}$, n indicates the number of the sampling points on the first Bezier curve, n is an integer greater than 1, $1 \leq i \leq n$ and i is an integer.

In step 204c, the sampling points on the first Bezier curve are connected sequentially to obtain the first Bezier curve, and the first Bezier curve is used as the lane center line of the target lane.

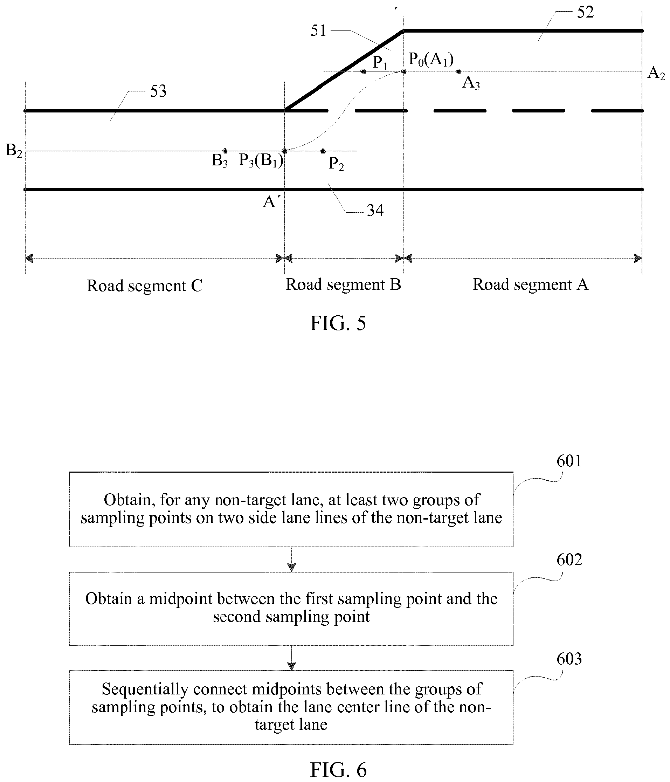

FIG.5 is a schematic diagram of determining a lane center line of a target lane 51 by constructing a Bezier curve. A center endpoint of a first end of the target lane 51 is $P_0$, and a center endpoint of a second end of the target lane 51 is $P_3$. A lane center line of a first lane 52 is $A_1A_2$, $A_1$ is an endpoint being on the lane center line of the first lane 52 and connected to the first end of the target lane, and $A_3$ is a sampling point closest to $A_1$. A lane center line of a second lane 53 is $B_1B_2$, $B_1$ is an endpoint being on the lane center line of the second lane 53 and connected to the second end of the target lane, and $B_3$ is a sampling point closest to $B_1$. For the illustration about a manner of determining lane center lines of the first lane and the second lane and a related sampling point, one may refer to the following related embodiments of determining a lane center line of a non-target lane. Assuming that a control point $P_0$ coincides with $A_1$, and a control point $P_3$ coincides with $B_1$, it can be ensured that lane center lines of the target lane and a lane connected to the target lane are continuous. A control point $P_1$ is located on an extension line of $A_3A_1$, and a control point $P_2$ is located on an extension line of $B_3B_1$. After four control points of the first Bezier curve are determined, coordinates of sampling points on the first Bezier curve are calculated by using a cubic formula for a Bezier curve introduced in step 204b, and then the sampling points are connected to obtain the first Bezier curve that is shown by a curve $P_0P_3$ in FIG.5. The curve $P_0P_3$ is the lane center line of the target lane 51.

The lane center line of the target lane is determined by constructing a Bezier curve, so that a curvature of a joint between the target lane and a lane center line of a neighboring road segment of the target lane is continuous, and sudden changing of the curvature does not occur, thereby better satisfying an actual travelling requirement, and being beneficial to support advanced driver assistance and unmanned driving by means of the lane center line.

Moreover, in this embodiment, only an example in which the lane center line of the target lane is determined by constructing a Bezier curve is used. In another embodiment, the lane center line of the target lane may be determined by constructing a spline curve, and continuous curvature can also be achieved.

It should be noted that, in the embodiment of the present disclosure, an order of performing step 202 and step 203 is not limited. Step 202 may be performed before step 203, may be performed after step 203, or step 202 and step 203 are performed at the same time.

In step 205, the server stores information of the two endpoints of the determined lane center line and the target lane in the database.

To sum up, for an added or subtracted lane in a road segment having a changed lane number, a lane center line of the lane is determined by using the solution provided in the embodiment of the present disclosure, and it can be ensured that lane center lines of the lane and a lane connected to the lane are continuous, thereby improving accuracy of determining the lane center line. Moreover, with the solution provided in the embodiment of the present disclosure, computing is performed automatically without manual intervention, thereby fully improving the efficiency of determining the lane center line.

A manner of determining a lane center line of a non-target lane is introduced and described below. The non-target lane includes: lanes other than the target lane in the first road segment and any lane in a second road segment, and the second road segment is a road segment having an unchanged lane number. The server uses, for any non-target lane, a center line of two side lane lines of the non-target lane as a lane center line of the non-target lane.

In an example, as shown in FIG.6, a lane center line of a non-target lane is determined by using the following steps 601 to 603.

In step 601, for any non-target lane, at least two groups of sampling points are obtained on two side lane lines of the non-target lane.

Each group of sampling points include a first sampling point and a second sampling point. Each of the first sampling point and the second sampling point is located on one of lane lines of the non-target lane, and a connecting line between the first sampling point and the second sampling point is perpendicular to a travelling direction of the non-target lane.

In step 602, a midpoint between the first sampling point and the second sampling point is obtained.

In step 603, midpoints between the groups of sampling points are sequentially connected, to obtain the lane center line of the non-target lane.

Assuming that the first sampling point is a sampling point Li on a left lane line of the non-target lane, and the second sampling point is a sampling point Ri on a right lane line of the non-target lane. A connecting line between the first sampling point Li and the second sampling point Ri is perpendicular to the travelling direction of the non-target lane, where i is a positive integer. A midpoint Ci between the first sampling point Li and the second sampling point Ri may be calculated by using the following formula:

$$Ci(x)=(Li(x)+Ri(x))/2;$$

$$Ci(y)=(Li(y)+Ri(y))/2;$$

$$Ci(z)=(Li(z)+Ri(z))/2.$$

In which, Ci(x), Ci(y) and Ci(z) respectively indicate an x-axis coordinate, a y-axis coordinate and a z-axis coordinate of the midpoint Ci, Li(x), Li(y) and Li(z) respectively indicate an x-axis coordinate, a y-axis coordinate and a z-axis coordinate of the sampling point Li, and Ri(x), Ri(y) and Ri(z) respectively indicate an x-axis coordinate, a y-axis coordinate and a z-axis coordinate of the sampling point Ri. The midpoint Ci, the first sampling point Li and the second sampling point Ri are located in a same coordinate system. The foregoing formula may be equivalently represented as: Ci=(Li+Ri)/2.

After obtaining the midpoint Ci between the first sampling point Li and the second sampling point Ri, the server sequentially connects all midpoints Ci, to obtain the lane center line of the non-target lane.

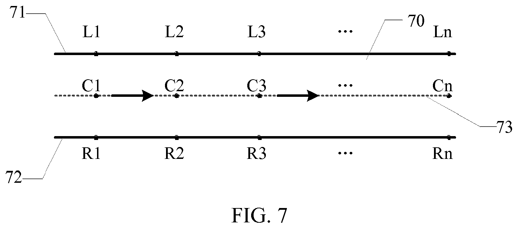

Reference is made to FIG.7 which is a schematic diagram of determining a lane center line of a non-target lane. A travelling direction of the non-target lane 70 is from left to right. The non-target lane 70 includes a left lane line 71 and a right lane line 72, sampling points L1, L2, ..., and Ln exist on the left lane line 71, sampling points R1, R2, ..., and Rn exist on the right lane line 72. The server obtains midpoints Cl, C2, ..., and Cn between the groups of sampling points, and sequentially connects the foregoing midpoints, to obtain a lane center line 73 of the non-target lane 70.

The lane center line of the non-target lane is determined in the foregoing manner, the implementation is simple, and the calculation amount is small.

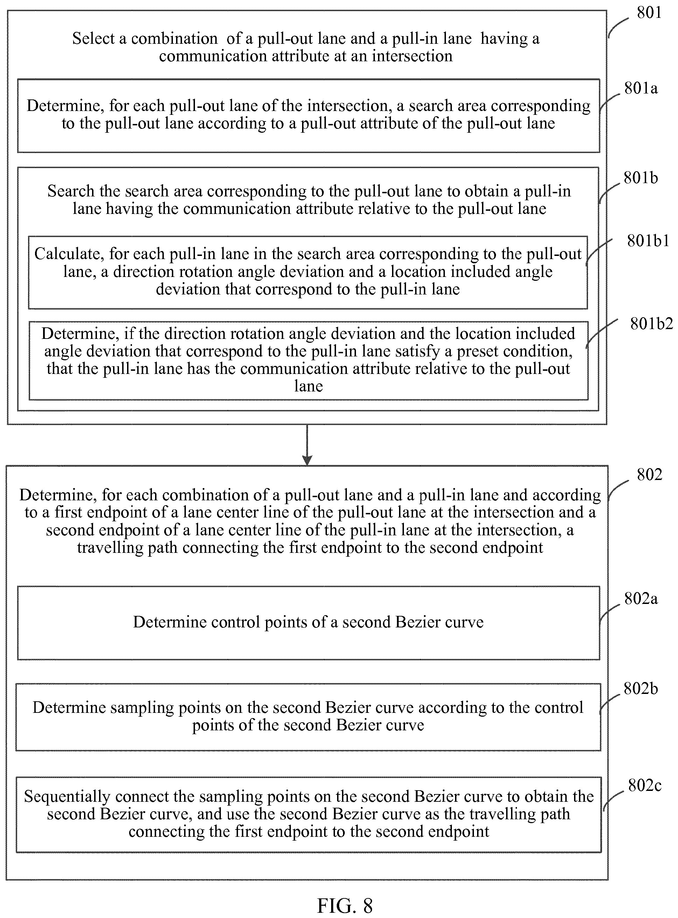

A connection method for a lane center line at an intersection is introduced and described below by using an embodiment shown in FIG.8.

In step 801, a combination of a pull-out lane and a pull-in lane having a communication attribute is selected at an intersection.

The communication attribute is an attribute that a vehicle pulls in to the intersection from the pull-out lane and enters the pull-in lane through the intersection. The pull-out lane is a lane through which the vehicle pulls in to the intersection, and the pull-in lane is a lane to which the vehicle pulls in from the intersection. The server may determine, according to lane information stored in a high-precision map, whether a lane is a pull-out lane or a pull-in lane.

In some embodiments, step 801 includes the following substeps 801a and 801b.

In step 801a, for each pull-out lane of the intersection, a search area corresponding to the pull-out lane is determined according to a pull-out attribute of the pull-out lane.

The pull-out attribute includes at least one of turning right, turning left, going straight, and making a U-turn. The server may obtain the pull-out attribute of the pull-out lane according to the lane information (for example, lane travelling direction attribute data) stored in the high-precision map.

In a case that the pull-out attributes of the pull-out lane differ, the search areas corresponding to the pull-out lane determined by the server also differ. Specifically, the following possible cases are included.

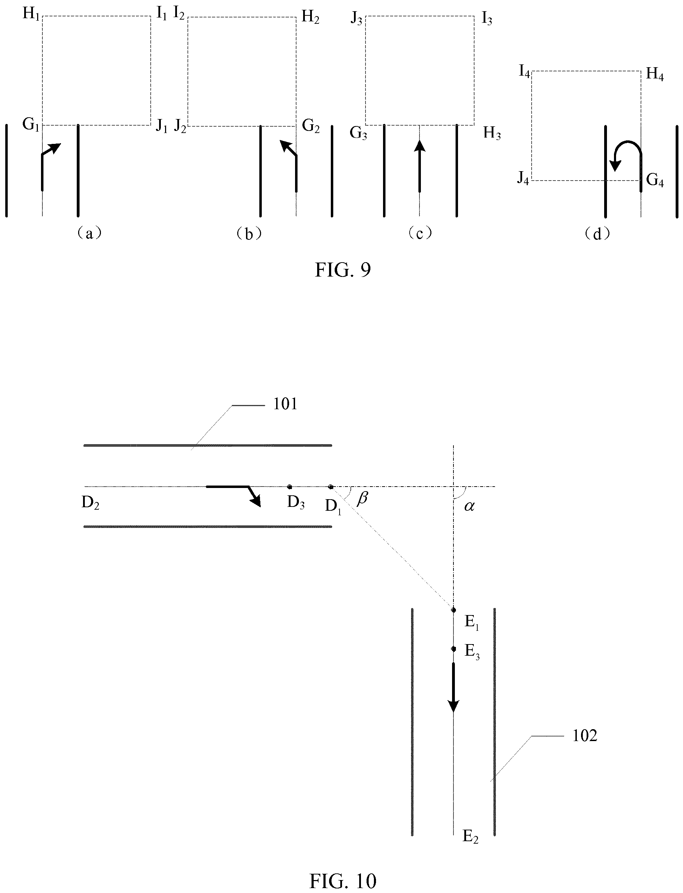

1. It is determined, if a pull-out attribute of a pull-out lane includes turning right, that a first rectangular area $G_1H_1I_1J_1$ is a search area corresponding to the pull-out lane. In which, $G_1$ coincides with a first endpoint, the first endpoint is an endpoint of a lane center line of the pull-out lane at an intersection, $H_1$ is located on an extension line of the lane center line of the pull-out lane at the intersection, and $I_1J_1$ is parallel to $G_1H_1$ and is located on a side of a right turning direction of $G_1H_1$, as shown in part (a) in FIG.9.

2. It is determined, if a pull-out attribute of a pull-out lane includes turning left, that a second rectangular area $G_2H_2I_2J_2$ is a search area corresponding to the pull-out lane. In which, $G_2$ coincides with a first endpoint, $H_2$ is located on an extension line of a lane center line of the pull-out lane at an intersection, and $I_2J_2$ is parallel to $G_2H_2$ and is located on a side of a left turning direction of $G_2H_2$, as shown in part (b) in FIG.9.

3. It is determined, if a pull-out attribute of a pull-out lane includes going straight, that a third rectangular area $G_3H_3I_3J_3$ is a search area corresponding to the pull-out lane. In which, the first endpoint is a midpoint of $G_3H_3$, and $I_3J_3$ is parallel to $G_3H_3$ and is located on a side of a straight going direction of $G_3H_3$, as shown in part (c) in FIG.9.

4. It is determined, if a pull-out attribute of a pull-out lane includes making a U-turn, that a fourth rectangular area $G_4H_4I_4J_4$ is the search area corresponding to the pull-out lane. In which, the first endpoint is a midpoint of $G_4H_4$, and $I_4J_4$ is parallel to $G_4H_4$ and is located on a side of a turning left direction of $G_4H_4$, as shown in part (d) in FIG.9.

The side length of each of the foregoing search areas may be determined according to a practical empirical value or an area of the intersection. In some embodiments, each of the foregoing search areas is a square area, and a value of the side length L of the square area may be obtained according to experience. For example, the value of L ranges from 10 meters to 100 meters.

In step 801b, the search area corresponding to the pull-out lane is searched to obtain a pull-in lane having the communication attribute relative to the pull-out lane.

The server searches the search area corresponding to the pull-out lane to obtain one or more pull-in lanes having the communication attribute relative to the pull-out lane.

.In some embodiments, step 801b includes the following two substeps 801bl and 801b2.

In step 801bl, for each pull-in lane in the search area corresponding to the pull-out lane, a direction rotation angle deviation and a location included angle deviation that correspond to the pull-in lane are calculated.

The direction rotation angle deviation refers to an absolute value of a difference between a direction rotation angle and an ideal direction rotation angle, and the location included angle deviation refers to an absolute value of a difference between a location included angle and an ideal location included angle.

Reference is made to FIG.10 which is a schematic diagram of an intersection. At the intersection, a pull-out lane 101 and a pull-in lane 102 are included. $D_1$ is a first endpoint, the first endpoint is an endpoint of a lane center line $D_1D_2$ of the pull-out lane 101 at the intersection, and $D_3$ is located on the lane center line $D_1D_2$ of the pull-out lane 101. $E_1$ is a second endpoint, the second endpoint is an endpoint of a lane center line $E_1E_2$ of the pull-in lane 102 at the intersection, and $E_3$ is located on the lane center line $E_1E_2$ of the pull-in lane 102. A direction rotation angle $\alpha$ is an angle between $\overline{D_3D_1}$ and $\overline{E_1E_3}$, and a location included angle $\beta$ is an angle between $\overline{D_3D_1}$ and $\overline{D_1E_1}$.

An ideal direction rotation angle $\alpha_0$ and an ideal location included angle $\beta_0$ are preset values determined in advance according to a pull-out attribute. The ideal direction rotation angle $\alpha_0$ and the ideal location included angle $\beta_0$ are directional. In the embodiment of the present disclosure, a clockwise direction indicates negative, an anticlockwise direction indicates positive, and the angle unit is degree (°). For example, a correspondence among the ideal direction rotation angle $\alpha_0$, the ideal location included angle $\beta_0$, and the pull-out attribute is shown in the following Table 1.

Table 1

| Pull-out attribute | Ideal direction rotation angle $\alpha_0$ | Ideal location included angle $\beta_0$ |
|---|---|---|
| Turning right | -90° | -45° |
| Turning left | 90° | 45° |
| Going straight | 0° | 0° |
| Making a U-turn | 180° | 90° |

In step 801b2, if the direction rotation angle deviation and the location included angle deviation that correspond to the pull-in lane satisfy a preset condition, it is determined that the pull-in lane has the communication attribute relative to the pull-out lane.

In some embodiments, a matching coefficient corresponding to the pull-in lane is calculated based on the direction rotation angle deviation and the location included angle deviation that correspond to the pull-in lane. If the matching coefficient corresponding to the pull-in lane satisfies the preset condition, it is determined that the pull-in lane has the communication attribute relative to the pull-out lane.

For example, the matching coefficient corresponding to the pull-in lane may be calculated by using the following formula:

$$\eta = |\alpha - \alpha_0| + |\beta - \beta_0| - \lambda \text{ ,}$$

where $\eta$ indicates the matching coefficient corresponding to the pull-in lane; $|\alpha - \alpha_0|$ indicates the direction rotation angle deviation, the direction rotation angle deviation indicates an absolute value of a difference between the direction rotation angle $\alpha$ and the ideal direction rotation angle $\alpha_0$; $|\beta - \beta_0|$ indicates the location included angle deviation, the location included angle deviation indicates an absolute value of a difference between the location included angle $\beta$ and the ideal location included angle $\beta_0$, and $\lambda$ indicates a preset threshold. A value of the preset threshold $\lambda$ may be obtained according to experience. For example, the value of the preset threshold $\lambda$ ranges from 30° to 67.5°.

In some embodiments, the preset condition is that the matching coefficient $\eta$ is less than 0. For example, when the matching coefficient $\eta$ corresponding to the pull-in lane is -5°, it is determined that the pull-in lane has the communication attribute relative to the pull-out lane.

In some embodiments, in a case that the matching coefficients corresponding to respective pull-in lanes each are not less than 0, it is determined that a pull-in lane having a minimum matching coefficient has the communication attribute relative to the pull-out lane. For example, the pull-out lane corresponds to a first pull-in lane and a second pull-in lane. If a matching coefficient corresponding to the first pull-in lane is 2°, and a matching coefficient corresponding to the second pull-in lane is 5°, it is determined that the first pull-in lane has the communication attribute relative to the pull-out lane.

In step 802, for each combination of a pull-out lane and a pull-in lane, a travelling path connecting the first endpoint to the second endpoint is determined, according to a first endpoint of a lane center line of the pull-out lane at the intersection and a second endpoint of a lane center line of the pull-in lane at the intersection.

In a possible implementation, a straight line connecting the first endpoint to the second endpoint functions as a travelling path.

In another possible implementation, a curve connecting the first endpoint to the second endpoint functions as a travelling path.

In an example, a travelling path connecting the first endpoint to the second endpoint is determined by constructing a Bezier curve. Step 802 includes the following substeps 802a to 802c.

In step 802a, control points of a second Bezier curve are determined.

The control points of the second Bezier curve include $Q_0$, $Q_1$, $Q_2$ and $Q_3$, $Q_0$ coincides with the first endpoint

$$Q_1 = D_1 + k_2(D_1 - D_3)\frac{|D_1 E_1|}{|D_1 D_3|} \text{ ,}$$

$D_1$; $Q_3$ coincides with the second endpoint $E_1$, a coordinate of $Q_1$ is and a coor-

$$Q_2 = E_1 + k_2(E_1 - E_3)\frac{|D_1 E_1|}{|E_1 E_3|}$$

dinate of $Q_2$ is . $D_3$ is located on the lane center line $D_1 D_2$ of the pull-out lane. For example, $D_3$ is a sampling point being closest to $D_1$ on the lane center line $D_1 D_2$ of the pull-out lane. $E_3$ is located on the lane center line $E_1 E_2$ of the pull-in lane. For example, $E_3$ is a sampling point being closest to $E_1$ on the lane center line $E_1 E_2$ of the pull-in lane. $|D_1 E_1|$ indicates the length of the line segment $D_1 E_1$, $|D_1 D_3|$ indicates the length of the line segment $D_1 D_3$, $|E_1 E_3|$ indicates the length of the line segment $E_1 E_3$, and $k_2$ is a preset constant. A value of $k_2$ may be obtained according to practical experience. For example, the value of $k_2$ ranges from 0.2 to 0.7.

In step 802b, sampling points on the second Bezier curve are determined according to the control points of the second Bezier curve.

A coordinate $F_j$ of a j-th sampling point on the second Bezier curve is:

$$F_j = Q_0 u^3 + 3Q_1 u^2(1-u) + 3Q_2 u(1-u)^2 + Q_3(1-u)^3,$$

$$u = \frac{j-1}{m-1},$$

where                  , m indicates the number of the sampling points on the second Bezier curve, m is an integer greater than 1, $1 \leq j \leq m$ and j is an integer.

In step 802c, the sampling points on the second Bezier curve are sequentially connected to obtain the second Bezier curve, and the second Bezier curve is used as the travelling path connecting the first endpoint to the second endpoint.

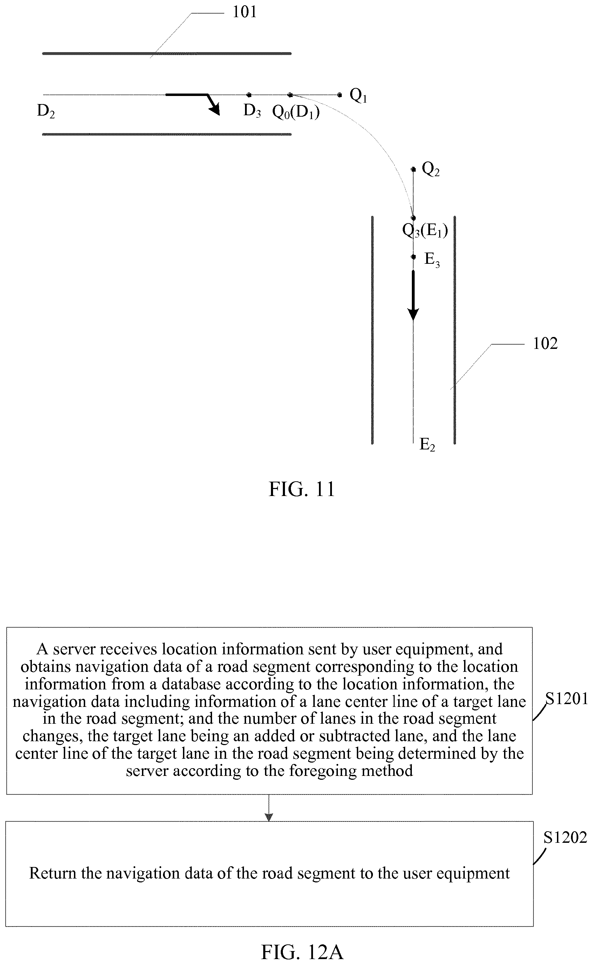

FIG.11 is a schematic diagram of determining a travelling path by constructing a Bezier curve. A lane center line of a pull-out lane 101 is $D_1 D_2$, a first endpoint is $D_1$, and $D_3$ is a sampling point closest to $D_1$. A lane center line of a pull-in lane 102 is $E_1 E_2$, a second endpoint is $E_1$, and $E_3$ is a sampling point closest to $E_1$. Assuming that a control point $Q_0$ coincides with $D_1$, and a control point $Q_3$ coincides with $E_1$, it can be ensured that lane center lines of the travelling path and a lane connected to the travelling path are continuous. A control point $Q_1$ is located on an extension line of $D_3 D_1$, and a control point $Q_2$ is located on an extension line of $E_3 E_1$. After four control points of the second Bezier curve are determined, coordinates of sampling points on the second Bezier curve are calculated by using a cubic formula for a Bezier curve introduced in step 802b, and then the sampling points are connected to obtain the second Bezier curve that is shown by a curve $Q_0 Q_3$ in FIG.11. The curve $Q_0 Q_3$ is the travelling path connecting the first endpoint to the second endpoint.

The travelling path connecting the first endpoint to the second endpoint is determined by constructing a Bezier curve, so that a curvature of a joint between the travelling path and the lane center line connected to the travelling path is continuous, and sudden changing of the curvature does not occur, thereby better satisfying an actual travelling requirement, and being beneficial to supporting advanced driver assistance and unmanned driving by means of the determined travelling path.

Moreover, in the embodiment, only an example in which a travelling path connecting the first endpoint to the second endpoint is determined by constructing a Bezier curve is used. In another embodiment, the travelling path may be determined by constructing a spline curve, and continuous curvature can be achieved.

To sum up, in the method according to the embodiment of the present disclosure, after a lane center line of each lane is determined, a pull-out lane and a pull-in lane are respectively determined according to a pull-out attribute, and then the lane center line of the pull-out lane is connected to the lane center line of the pull-in lane, thereby implementing integrity of connection of the lane center lines within a road topology.

An apparatus is described hereinafter. The apparatus may be configured to execute the method embodiments of the present disclosure. For details not disclosed in the apparatus embodiment of the present disclosure, one may refer to the method embodiments and system embodiments of the present disclosure.

FIG.12A is a flowchart of a lane center line determining method according to an embodiment of the present disclosure. The method may be performed by a server configured to provide a navigation service to user equipment. As shown in FIG.12A, The method includes the following steps 1201 and 1202.

In step S1201, a server receives location information sent by user equipment, and obtains, according to the location information, navigation data of a road segment corresponding to the location information from a database. The navigation data includes information of a lane center line of a target lane in the road segment. The number of lanes changes in the road segment, the target lane indicates an added or subtracted lane, and the lane center line of the target lane in the road segment is determined by the server according to the foregoing method.

In some embodiments, after receiving the location information, the server may obtain a road segment corresponding to the location information according to the location information. If the road segment is the road segment having a changed lane number described in the foregoing embodiment, a lane center line of a target lane in the road segment is determined by the server according to the method in the foregoing embodiment.

In step S1202, the server returns the navigation data corresponding to the road segment to the user equipment.

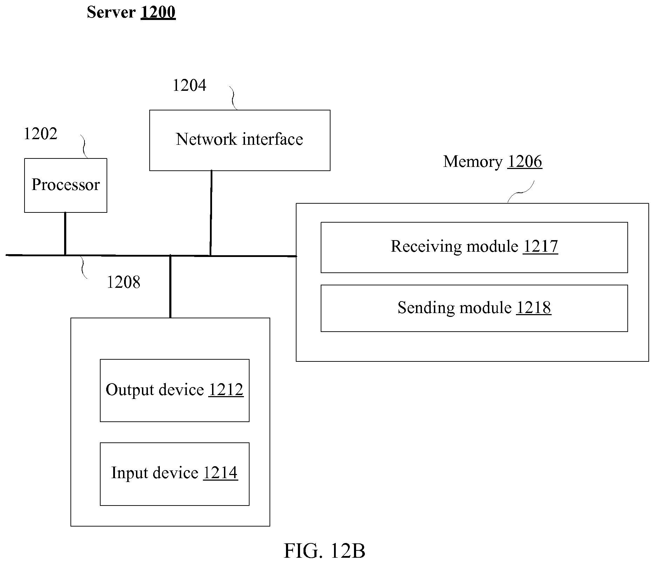

FIG.12B is a schematic structural diagram of a server according to an embodiment of the present disclosure. The user equipment may be the server 112 shown in FIG.1.

As shown in FIG.12B, the server 1200 includes: one or more processors (CPU) 1202, a network interface 1204, a memory 1206, and a communication bus 1208 configured to connect these components.

In some embodiments, the network interface 1204 is configured to implement a network connection between the server 1200 and an external device, for example, receive a navigation data request message from the user equipment, or send navigation data to the user equipment.

The server 1200 may further include one or more output devices 1212 (for example, a touchscreen or a display), and/or include one or more input devices 1214 (for example, a touchscreen, a stylus, or another input control).

The memory 1206 may be a high-speed random access memory such as a DRAM, an SRAM, a DDR RAM, or other random access solid-state storage devices; or a non-volatile memory such as one or more magnetic disk storage devices, optical disc storage devices, flash memory devices, or other non-volatile solid-state storage devices.

The memory 1206 includes: a receiving module 1217 and a sending module 1218.

The receiving module 1217 is configured to receive location information sent by user equipment, and obtain, according to the location information, navigation data of a road segment corresponding to the location information from a database. The navigation data includes information of a lane center line of a target lane in the road segment. The number of lanes in the road segment changes, the target lane indicates an added or subtracted lane, and the lane center line of the target lane in the road segment is determined by the server according to the foregoing method.

The sending module 1218 is configured to return the navigation data corresponding to the road segment to the user equipment.

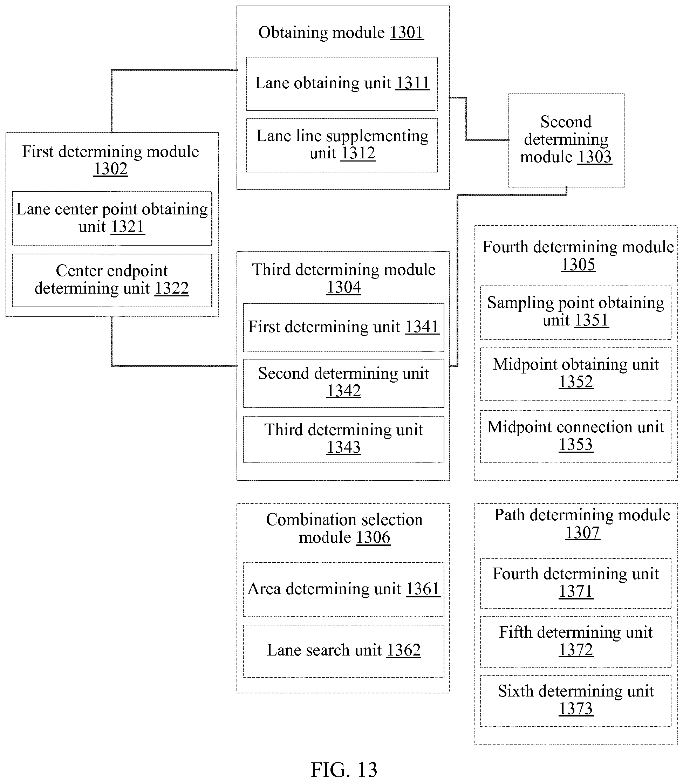

Reference is made to FIG.13 which is a block diagram of a lane center line determining apparatus according to an embodiment of the present disclosure. The apparatus has functions of implementing the foregoing method examples. The functions may be implemented by hardware, or may be implemented by hardware executing corresponding software. The apparatus may include: an obtaining module 1301, a first determining module 1302, a second determining module 1303 and a third determining module 1304.

The obtaining module 1301 is configured to perform the foregoing step 201.

The first determining module 1302 is configured to perform the foregoing step 202.

The second determining module 1303 is configured to perform the foregoing step 203.

The third determining module 1304 is configured to perform the foregoing steps 204 and 205.

In some embodiments, the third determining module 1304 includes: a first determining unit, a second determining unit and a third determining unit.

The first determining unit 1341 is configured to perform the foregoing step 204a.

The second determining unit 1342 is configured to perform the foregoing step 204b.

The third determining unit 1343 is configured to perform the foregoing step 204c.

In some embodiments, the first determining module 1302 includes: a lane center point obtaining unit 1321 and a center endpoint determining unit 1322.

The lane center point obtaining unit 1321 is configured to perform the foregoing step 203a.

The center endpoint determining unit 1322 is configured to perform the foregoing step 203b, step 203c and step 203d.

In some embodiments, the obtaining module 1301 includes: a lane obtaining unit 1311 and a lane line supplementing unit 1312.

The lane obtaining unit 1311 is configured to determine, if there is a lane line in the first road segment, the target lane according to lane lines in the first road segment.

The lane line supplementing unit 1312 is configured to supplement, if a lane line is absent in the first road segment, the lane line absent in the first road segment according to lane lines of two side neighboring road segments connected to the first road segment. The lane obtaining unit 1311 is further configured to determine the target lane according to lane lines in the first road segment.

In some embodiments, the lane line supplementing unit 1312 is configured to:
select, for any first lane line endpoint, a second lane line endpoint at a shortest distance from the first lane line endpoint if a lane line connected to the first lane line endpoint is absent in the first road segment, and connect the first lane line endpoint to the selected second lane line endpoint to form a lane line. The first lane line endpoint is an endpoint of a lane line in a first neighboring road segment close to the first road segment, the second lane line endpoint is an endpoint of a lane line in a second neighboring road segment close to the first road segment, and the number of lanes of the first neighboring road segment is greater than the number of lanes of the second neighboring road segment.

In some embodiments, the apparatus further includes: a fourth determining module 1305.

The fourth determining module 1305 is configured to use, for any non-target lane, a center line of two side lane lines of the non-target lane as a lane center line of the non-target lane. The non-target lane includes: lanes other than the target lane in the first road segment and any lane in a second road segment, and the second road segment is a road segment having an unchanged lane number.

In some embodiments, the fourth determining module 1305 includes: a sampling point obtaining unit 1351, a midpoint obtaining unit 1352 and a midpoint connection unit 1353.

The sampling point obtaining unit 1351 is configured to perform the foregoing step 601.

The midpoint obtaining unit 1352 is configured to perform the foregoing step 602.

The midpoint connection unit 1353 is configured to perform the foregoing step 603.

In some embodiments, the apparatus further includes: a combination selection module 1306 and a path determining module 1307.

The combination selection module 1306 is configured to perform the foregoing step 801.

The path determining module 1307 is configured to perform the foregoing step 802.

In some embodiments, the combination selection module 1306 includes: an area determining unit 1361 and a lane search unit 1362.

The area determining unit 1361 is configured to perform the foregoing step 801a.

The lane search unit 1362 is configured to perform the foregoing step 801b.

In some embodiments, the area determining unit 1361 is configured to:

determine, if a pull-out attribute of a pull-out lane includes turning right, that a first rectangular area $G_1H_1I_1J_1$ is a search area corresponding to the pull-out lane, where $G_1$ coincides with a first endpoint, $H_1$ is located on an extension line of a lane center line of the pull-out lane at an intersection, and $I_1J_1$ is parallel to $G_1H_1$ and is located on a side of a right turning direction of $G_1H_1$; determine; determine, if a pull-out attribute of a pull-out lane includes turning left, that a second rectangular area $G_2H_2I_2J_2$ is a search area corresponding to the pull-out lane, where $G_2$ coincides with a first endpoint, $H_2$ is located on an extension line of a lane center line of the pull-out lane at an intersection, and $I_2J_2$ is parallel to $G_2H_2$ and is located on a side of a left turning direction of $G_2H_2$; determine, if a pull-out attribute of a pull-out lane includes going straight, that a third rectangular area $G_3H_3I_3J_3$ is a search area corresponding to the pull-out lane, where the first endpoint is a midpoint of $G_3H_3$, and $I_3J_3$ is parallel to $G_3H_3$ and is located on a side of a straight going direction of $G_3H_3$; or determine, if a pull-out attribute of a pull-out lane includes making a U-turn, that a fourth rectangular area $G_4H_4I_4J_4$ is the search area corresponding to the pull-out lane, where the first endpoint is a midpoint of $G_4H_4$, and $I_4J_4$ is parallel to $G_4H_4$ and is located on a side of a turning left direction of $G_4H_4$.

In some embodiments, the lane search unit 1362 is configured to perform the foregoing step 801bl and step 801b2.

In some embodiments, the path determining module 1307 includes: a fourth determining unit 1371, a fifth determining unit 1372 and a sixth determining unit 1373.

The fourth determining unit 1371 is configured to perform the foregoing step 802a.

The fifth determining unit 1372 is configured to perform the foregoing step 802b.

The sixth determining unit 1373 is configured to perform the foregoing step 802c.

For specific details, one may refer to the foregoing method embodiments.

It should be noted that: when the apparatus provided in the foregoing embodiment implements the functions of the apparatus, only division of the foregoing function modules is used as an example for description. In the practical application, the functions may be completed by different function modules according to requirements. That is, the device is divided into different function modules, to complete all or some of the functions described above. In addition, the apparatus and method embodiments provided in the foregoing embodiments belong to one conception. For the specific implementation process, one may refer to the method embodiments, and details are not described herein again.

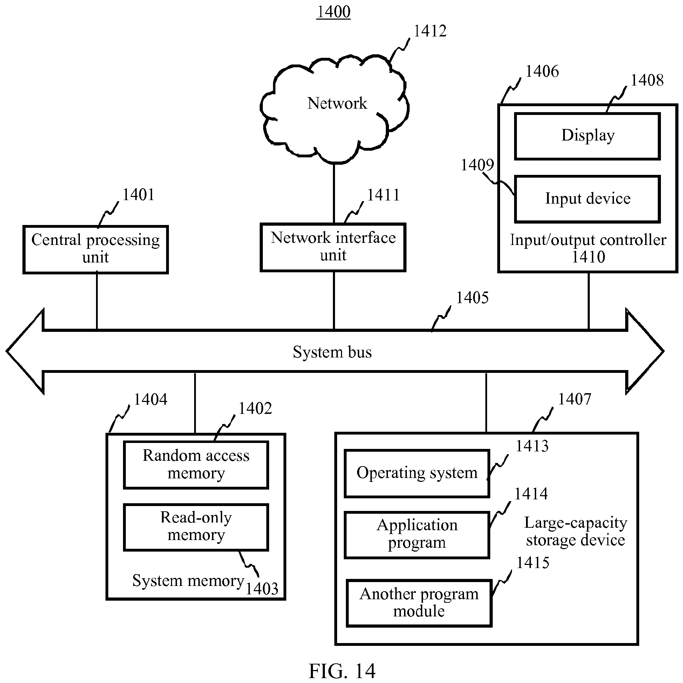

FIG.14 is a schematic structural diagram of a server according to an embodiment of the present disclosure. The server is configured to implement the lane center line determining method according to the foregoing embodiments.

The server 1400 includes a central processing unit (CPU) 1401, a system memory 1404 including a random access memory (RAM) 1402 and a read-only memory (ROM) 1403, and a system bus 1405 connecting the system memory 1404 to the CPU 1401. The server 1400 further includes a basic input/output system (I/O system) 1406 configured to perform information transmission between devices in a computer, and a large-capacity storage device 1407 configured to store an operating system 1413, an application program 1414 and another program module 1415.

The basic I/O system 1406 includes a display 1408 configured to display information and an input device 1409 configured to input information for a user, such as a mouse or a keyboard. The display 1408 and the input device 1409 are both connected to the CPU 1401 via an input and output controller 1410 connected to the system bus 1405. The basic I/O system 1406 may further include the input and output controller 1410 configured to receive and process inputs from multiple other devices such as a keyboard, a mouse, and an electronic stylus. Similarly, the input and output controller 1410 further provides an output to a display screen, a printer or another type of output device.

The large-capacity storage device 1407 is connected to the CPU 1401 by using a large-capacity storage controller (not shown) connected to the system bus 1405. The large-capacity storage device 1307 and its associated computer readable medium provide non-volatile storage for the server 1400. That is, the large-capacity storage device 1407 may include the computer readable medium (not shown) such as a hard disk or a CD-ROM driver.

Without loss of generality, the computer readable medium may include a computer storage medium and a communication medium. The computer storage medium includes volatile and non-volatile media, and removable and non-removable media implemented by using any method or technology and configured to store information such as a computer-readable instruction, a data structure, a program module, or other data. The computer storage medium includes a RAM, a ROM, an EPROM, an EEPROM, a flash memory, other solid storage devise such as a CD-ROM and a DVD, other optical storages, a cassette, a magnetic tape, a disk storage, or other magnetic storage devices. Certainly, a person skilled in art can know that the computer storage medium is not limited to the foregoing examples. The system memory 1404 and the large-capacity storage device 1407 may be collectively referred to as a memory.

According to various embodiments of the present disclosure, the server 1400 may be connected, over a network such as the Internet, to a remote computer on the network and run. That is, the server 1400 may be connected to a network 1412 by using a network interface unit 1411 connected to the system bus 1405, or may be connected to another type of network or remote computer system (not shown) by using the network interface unit 1411.

The memory further includes one or more programs. The one or more programs are stored in the memory and configured to be executed by one or more processors. The one or more programs include an instruction for performing the methods at the server side.

In an exemplary embodiment, a non-transitory computer readable storage medium including an instruction is further provided, for example, a memory including an instruction. The foregoing instruction may be executed by a processor of a server to complete the steps in the foregoing method embodiments at the server side. For example, the non-transitory computer readable storage medium may be a ROM, a random access memory (RAM), a CD-ROM, a magnetic tape, a floppy disk, an optical data storage device, or the like.

An association relationship represents that three relationships may exist. For example, A and/or B may represent the following three cases that: only A exists, both A and B exist, and only B exists. In addition, the character "/" generally indicates an "or" relationship between the associated objects. The "first", the "second" and similar terms used herein do not indicate any order, quantity or significance, but are used to only distinguish different components.

The sequence numbers of the foregoing embodiments of the present disclosure are merely for description and do not indicate the preference of the embodiments.

## Claims

1. A lane center line determining method, comprising:

   obtaining, by a server (112, 1200, 1400), a target lane in a first road segment from a database (110), wherein the first road segment indicates a road segment having a changed lane number, the target lane indicates an added or subtracted lane, two side lane lines of the target lane are respectively connected to two side lane lines of a first lane at two endpoints of a first end of the target lane, the two side lane lines of the target lane intersect at an intersection point at a second end of the target lane and the intersection point is connected to a side lane line of a second lane;
   obtaining, by the server (112, 1200, 1400), related information of the target lane from the database (110), wherein the related information comprises: locations of the two endpoints of the first end of the target lane, a location of the intersection point at the second end of the target lane, and a location of a lane center point of a neighboring lane of the target lane;
   determining, by the server (112, 1200, 1400) for the first end of the target lane, a midpoint of the two endpoints of the first end of the target lane, as a center endpoint of the first end of the target lane;
   determining, by the server (112, 1200, 1400) for the second end of the target lane, the lane center point of the neighboring lane of the target lane as a center endpoint of the second end of the target lane, wherein the lane center point of the neighboring lane indicates a midpoint between the intersection point and a mapping point of the intersection point, the intersection point and the mapping point of the intersection point are respectively located on two side lane lines of the neighboring lane, and a connecting line between the intersection point and the mapping point of the intersection point is perpendicular to a travelling direction of the neighboring lane;
   determining, by the server (112, 1200, 1400), a lane center line of the target lane by using the center endpoint of the first end of the target lane and the center endpoint of the second end of the target lane as two endpoints of the lane center line of the target lane; and
   storing information of the two endpoints of the determined lane center line and the target lane in the database (110).

2. The method according to claim 1, wherein the determining a lane center line of the target lane by using the center endpoint of the first end of the target lane and the center endpoint of the second end of the target lane as two endpoints of the lane center line of the target lane comprises:

   determining control points of a first Bezier curve;
   determining sampling points on the first Bezier curve based on the control points of the first Bezier curve; and
   connecting sequentially the sampling points on the first Bezier curve to obtain the first Bezier curve, and using the first Bezier curve as the lane center line of the target lane.

3. The method according to claim 1, wherein the neighboring lane of the target lane comprises a first neighboring lane and a second neighboring lane,
and wherein the determining, for the second end of the target lane, the lane center point of the neighboring lane of the target lane as a center endpoint of the second end of the target lane comprises:

obtaining a lane center point of the first neighboring lane and a lane center point of the second neighboring lane;
determining, if a first distance is less than a second distance, the lane center point of the first neighboring lane as the center endpoint of the second end of the target lane;
determining, if the first distance is greater than the second distance, the lane center point of the second neighboring lane as the center endpoint of the second end of the target lane; or
determining, if the first distance is equal to the second distance, the lane center point of the first neighboring lane or the lane center point of the second neighboring lane as the center endpoint of the second end of the target lane,
wherein the first distance indicates a distance between the center endpoint of the first end of the target lane and the lane center point of the first neighboring lane, and the second distance indicates a distance between the center endpoint of the first end of the target lane and the lane center point of the second neighboring lane.

4. The method according to claim 1, wherein the obtaining a target lane in a first road segment comprises:

determining, if there is a lane line in the first road segment, the target lane based on the lane line in the first road segment; or
supplementing, if a lane line is absent in the first road segment, the lane line absent in the first road segment based on lane lines of two side neighboring road segments connected to the first road segment, and determining the target lane based on the lane line in the first road segment.

5. The method according to claim 4, wherein the supplementing the lane line absent in the first road segment based on lane lines of two side neighboring road segments connected to the first road segment comprises:

determining a first lane line endpoint, wherein the first lane line endpoint indicates an endpoint of a lane line in a first neighboring road segment close to the first road segment;
determining a second lane line endpoint, wherein the second line endpoint indicates an endpoint of a lane line in a second neighboring road segment close to the first road segment;
selecting, for any first lane line endpoint, a second lane line endpoint at a shortest distance from the first lane line endpoint if a lane line connected to the first lane line endpoint is absent in the first road segment, and connecting the first lane line endpoint to the selected second lane line endpoint to form a lane line,
wherein the number of lanes of the first neighboring road segment is greater than the number of lanes of the second neighboring road segment.

6. The method according to claim 1, further comprising:

determining a non-target lane, wherein the non-target lane indicates a lane other than the target lane in the first road segment and any lane in the second road segment; and
using, for any non-target lane, a center line of two side lane lines of the non-target lane as a lane center line of the non-target lane.

7. The method according to claim 6, wherein the using, for any non-target lane, a center line of two side lane lines of the non-target lane as a lane center line of the non-target lane comprises:

obtaining, for any non-target lane, at least two groups of sampling points on the two side lane lines of the non-target lane, wherein each of the at least two groups of sampling points comprises a first sampling point and a second sampling point, each of the first sampling point and the second sampling point is located on one of the two lane lines of the non-target lane, and a connecting line between the first sampling point and the second sampling point is perpendicular to a travelling direction of the non-target lane;
obtaining a midpoint between the first sampling point and the second sampling point; and
connecting sequentially midpoints between the groups of sampling points, to obtain the lane center line of the non-target lane.

8. The method according to any one of claims 1 to 7, further comprising:

selecting a combination of a pull-out lane and a pull-in lane having a communication attribute at an intersection, wherein the communication attribute is an attribute that a vehicle pulls in to the intersection from the pull-out lane and enters the pull-in lane through the intersection; and

determining, for each combination of a pull-out lane and a pull-in lane according to a first endpoint of a lane center line of the pull-out lane at the intersection and a second endpoint of a lane center line of the pull-in lane at the intersection, a travelling path connecting the first endpoint to the second endpoint.

9. The method according to claim 8, wherein the selecting a combination of a pull-out lane and a pull-in lane having a communication attribute at an intersection comprises:

determining, for each pull-out lane of the intersection, a search area corresponding to the pull-out lane according to a pull-out attribute of the pull-out lane, wherein the pull-out attribute comprises at least one of turning right, turning left, going straight, and making a U-turn; and

searching the search area corresponding to the pull-out lane to obtain a pull-in lane having the communication attribute relative to the pull-out lane.

10. The method according to claim 9, wherein the determining a search area corresponding to the pull-out lane according to a pull-out attribute of the pull-out lane comprises:

determining, if the pull-out attribute of the pull-out lane comprises the turning right, that a first rectangular area $G_1H_1I_1J_1$ is the search area corresponding to the pull-out lane, wherein $G_1$ coincides with the first endpoint, $H_1$ is located on an extension line of a lane center line of the pull-out lane at the intersection, and $I_1J_1$ is parallel to $G_1H_1$ and is located on a side of a right turning direction of $G_1H_1$;

determining, if the pull-out attribute of the pull-out lane comprises the turning left, that a second rectangular area $G_2H_2I_2J_2$ is the search area corresponding to the pull-out lane, wherein $G_2$ coincides with the first endpoint, $H_2$ is located on an extension line of a lane center line of the pull-out lane at the intersection, and $I_2J_2$ is parallel to $G_2H_2$ and is located on a side of a left turning direction of $G_2H_2$;

determining, if the pull-out attribute of the pull-out lane comprises the going straight, that a third rectangular area $G_3H_3I_3J_3$ is the search area corresponding to the pull-out lane, wherein the first endpoint is a midpoint of $G_3H_3$, and $I_3J_3$ is parallel to $G_3H_3$ and is located on a side of a straight going direction of $G_3H_3$; or

determining, if the pull-out attribute of the pull-out lane comprises the making a U-turn, that a fourth rectangular area $G_4H_4I_4J_4$ is the search area corresponding to the pull-out lane, wherein the first endpoint is a midpoint of $G_4H_4$, and $I_4J_4$ is parallel to $G_4H_4$ and is located on a side of a turning left direction of $G_4H_4$.

11. The method according to claim 9, wherein the searching the search area corresponding to the pull-out lane to obtain a pull-in lane having the communication attribute relative to the pull-out lane comprises:

calculating, for each pull-in lane in the search area corresponding to the pull-out lane, a direction rotation angle deviation and a location included angle deviation that correspond to the pull-in lane, wherein the direction rotation angle deviation indicates an absolute value of a difference between a direction rotation angle and an ideal direction rotation angle, and the location included angle deviation indicates an absolute value of a difference between a location included angle and an ideal location included angle; and

determining, if the direction rotation angle deviation and the location included angle deviation that correspond to the pull-in lane satisfy a preset condition, that the pull-in lane has the communication attribute relative to the pull-out lane.

12. The method according to claim 8, wherein the determining, for each combination of a pull-out lane and a pull-in lane according to a first endpoint of a lane center line of the pull-out lane at the intersection and a second endpoint of a lane center line of the pull-in lane at the intersection, a travelling path connecting the first endpoint to the second endpoint comprises:

determining control points of a second Bezier curve;

determining sampling points on the second Bezier curve based on the control points of the second Bezier curve; and

connecting sequentially the sampling points on the second Bezier curve to obtain the second Bezier curve, and using the second Bezier curve as the travelling path connecting the first endpoint to the second endpoint.

13. A server (112, 1200, 1400), comprising:

a processor (1202); and
a memory (1206) connected to the processor (1202), wherein the memory (1206) stores machine-readable instructions to be executed by the processor (1202); and the instructions, when being executed, perform the method according to any one of claims 1 to 12.

14. A non-volatile computer readable storage medium storing machine-readable instructions, wherein the machine-readable instructions are executed by a processor (1202) to implement the method according to any one of claims 1 to 12.

**Patentansprüche**

1. Verfahren zur Bestimmung der Fahrbahnmittellinie, aufweisend:

Erhalten, durch einen Server (112, 1200, 1400), einer Zielspur in einem ersten Straßensegment aus einer Datenbank (110), wobei das erste Straßensegment ein Straßensegment mit einer geänderten Fahrspurnummer anzeigt, die Zielspur eine hinzugefügte oder weggenommene Spur anzeigt, zwei Seitenspurlinien der Zielspur jeweils mit zwei Seitenspurlinien einer ersten Spur an zwei Endpunkten eines ersten Endes der Zielspur verbunden sind, die zwei Seitenspurlinien der Zielspur sich an einem Schnittpunkt an einem zweiten Ende der Zielspur schneiden und der Schnittpunkt mit einer Seitenspurlinie einer zweiten Spur verbunden ist;
Erhalten, durch den Server (112, 1200, 1400), von verwandten Informationen der Zielspur aus der Datenbank (110), wobei die verwandten Informationen aufweisen: Orte der zwei Endpunkte des ersten Endes der Zielspur, einen Ort des Kreuzungspunktes am zweiten Ende der Zielspur und einen Ort eines Spurmittelpunktes einer Nachbarspur der Zielspur;
Bestimmen, durch den Server (112, 1200, 1400), für das erste Ende der Zielspur, eines Mittelpunkts der zwei Endpunkte des ersten Endes der Zielspur, als einen mittleren Endpunkt des ersten Endes der Zielspur;
Bestimmen, durch den Server (112, 1200, 1400), für das zweite Ende der Zielspur, des Spurmittelpunkts der Nachbarspur der Zielspur als mittlerer Endpunkt des zweiten Endes der Zielspur, wobei der Spurmittelpunkt der Nachbarspur einen Mittelpunkt zwischen dem Schnittpunkt und einem Zuordnungspunkt des Schnittpunkts angibt, der Schnittpunkt und der Zuordnungspunkt des Schnittpunkts jeweils auf zwei Seitenspurlinien der Nachbarspur liegen, und eine Verbindungslinie zwischen dem Schnittpunkt und dem Zuordnungspunkt des Schnittpunkts senkrecht zu einer Fahrtrichtung der Nachbarspur verläuft;
Bestimmen, durch den Server (112, 1200, 1400), einer Fahrspurmittellinie der Zielfahrspur unter Verwendung des mittleren Endpunkts des ersten Endes der Zielfahrspur und des mittleren Endpunkts des zweiten Endes der Zielfahrspur als zwei Endpunkte der Fahrspurmittellinie der Zielfahrspur; und
Speichern von Informationen über die beiden Endpunkte der ermittelten Fahrspurmittellinie und der Zielfahrspur in der Datenbank (110).

2. Verfahren nach Anspruch 1, wobei das Bestimmen einer Fahrspurmittellinie der Zielfahrspur unter Verwendung des mittleren Endpunkts des ersten Endes der Zielfahrspur und des mittleren Endpunkts des zweiten Endes der Zielfahrspur als zwei Endpunkte der Fahrspurmittellinie der Zielfahrspur aufweist:

Bestimmen von Kontrollpunkten einer ersten Bezier-Kurve;
Bestimmen von Abtastpunkten auf der ersten Bezier-Kurve basierend auf den Kontrollpunkten der ersten Bezier-Kurve; und
sequentielles Verbinden der Abtastpunkte auf der ersten Bezier-Kurve, um die erste Bezier-Kurve zu erhalten, und Verwenden der ersten Bezier-Kurve als Fahrspur-Mittellinie der Zielfahrspur.

3. Verfahren nach Anspruch 1, wobei die Nachbarspur der Zielspur eine erste Nachbarspur und eine zweite Nachbarspur aufweist,
und wobei das Bestimmen, für das zweite Ende der Zielspur, des Spurmittelpunkts der Nachbarspur der Zielspur als einen mittleren Endpunkt des zweiten Endes der Zielspur aufweist:

Erhalten eines Spurmittelpunkts der ersten Nachbarspur und eines Spurmittelpunkts der zweiten Nachbarspur;
Bestimmen, wenn ein erster Abstand kleiner als ein zweiter Abstand ist, des Spurmittelpunkts der ersten Nachbarspur als mittlerer Endpunkt des zweiten Endes der Ziel spur;
Bestimmen, wenn der erste Abstand größer als der zweite Abstand ist, des Spurmittelpunkts der zweiten Nachbarspur als mittlerer Endpunkt des zweiten Endes der Zielspur; oder

Bestimmen, wenn der erste Abstand gleich dem zweiten Abstand ist, des Spurmittelpunkts der ersten Nachbarspur oder des Spurmittelpunkts der zweiten Nachbarspur als mittleren Endpunkt des zweiten Endes der Zielspur,
wobei der erste Abstand einen Abstand zwischen dem mittleren Endpunkt des ersten Endes der Zielspur und dem Spurmittelpunkt der ersten Nachbarspur angibt, und der zweite Abstand einen Abstand zwischen dem mittleren Endpunkt des ersten Endes der Zielspur und dem Spurmittelpunkt der zweiten Nachbarspur angibt.

4. Verfahren nach Anspruch 1, wobei das Erhalten einer Zielspur in einem ersten Straßensegment aufweist:

Bestimmen, wenn es eine Fahrspurlinie im ersten Straßensegment gibt, der Zielspur basierend auf der Fahrspurlinie im ersten Straßensegment; oder
Ergänzen, wenn eine Fahrspurlinie in dem ersten Straßensegment fehlt, der in dem ersten Straßensegment fehlenden Fahrspurlinie auf der Grundlage von Fahrspurlinien von zwei seitlich benachbarten Straßensegmenten, die mit dem ersten Straßensegment verbunden sind, und Bestimmen der Zielfahrspur auf der Grundlage der Fahrspurlinie in dem ersten Straßensegment.

5. Verfahren nach Anspruch 4, wobei das Ergänzen der im ersten Straßensegment fehlenden Fahrspurlinie auf der Grundlage von Fahrspurlinien zweier seitlich benachbarter, mit dem ersten Straßensegment verbundener Straßensegmente aufweist:

Bestimmen eines ersten Fahrspurlinienendpunkts, wobei der erste Fahrspurlinienendpunkt einen Endpunkt einer Fahrspurlinie in einem ersten benachbarten Straßensegment nahe dem ersten Straßensegment anzeigt;
Bestimmen eines zweiten Fahrspurlinienendpunkts, wobei der zweite Linienendpunkt einen Endpunkt einer Fahrspurlinie in einem zweiten benachbarten Straßensegment nahe dem ersten Straßensegment anzeigt;
Auswählen, für jeden ersten Fahrspurlinienendpunkt, eines zweiten Fahrspurlinienendpunkts in kürzester Entfernung von dem ersten Fahrspurlinienendpunkt, wenn eine mit dem ersten Fahrspurlinienendpunkt verbundene Fahrspurlinie in dem ersten Straßensegment nicht vorhanden ist, und Verbinden des ersten Fahrspurlinienendpunkts mit dem ausgewählten zweiten Fahrspurlinienendpunkt, um eine Fahrspurlinie zu bilden,
wobei die Anzahl der Fahrspuren des ersten benachbarten Straßenabschnitts größer ist als die Anzahl der Fahrspuren des zweiten benachbarten Straßenabschnitts.

6. Verfahren nach Anspruch 1, ferner aufweisend:

Bestimmen einer Nicht-Zielspur, wobei die Nicht-Zielspur eine andere Spur als die Zielspur in dem ersten Straßensegment und eine beliebige Spur in dem zweiten Straßensegment anzeigt; und
Verwenden, für jede Nicht-Zielspur, einer Mittellinie von zwei seitlichen Spurlinien der Nicht-Zielspur als Spurmittellinie der Nicht-Zielspur.

7. Verfahren nach Anspruch 6, wobei das Verwenden einer Mittellinie von zwei seitlichen Spurlinien der Nicht-Zielspur als Spurmittellinie der Nicht-Zielspur für jede Nicht-Zielspur aufweist:

Erhalten, für jede Nicht-Zielspur, von mindestens zwei Gruppen von Abtastpunkten auf den beiden seitlichen Spurlinien der Nicht-Ziel-Spur, wobei jede der mindestens zwei Gruppen von Abtastpunkten einen ersten Abtastpunkt und einen zweiten Abtastpunkt aufweist, jeder der ersten und zweiten Abtastpunkte auf einer der beiden Spurlinien der Nicht-Ziel-Spur angeordnet ist und eine Verbindungslinie zwischen dem ersten Abtastpunkt und dem zweiten Abtastpunkt senkrecht zu einer Fahrtrichtung der Nicht-Ziel-Spur verläuft;
Erhalten eines Mittelpunkts zwischen dem ersten Abtastpunkt und dem zweiten Abtastpunkt; und
sequenzielles Verbinden von Mittelpunkten zwischen den Gruppen von Abtastpunkten, um die Spurmittellinie der Nicht-Zielspur zu erhalten.

8. Verfahren nach einem der Ansprüche 1 bis 7, ferner aufweisend:

Auswählen einer Kombination aus einer Ausfahrspur und einer Einfahrspur mit einem Kommunikationsattribut an einer Kreuzung, wobei das Kommunikationsattribut ein Attribut ist, dass ein Fahrzeug von der Ausfahrspur in die Kreuzung einfährt und über die Kreuzung in die Einfahrspur einfährt; und
Bestimmen, für jede Kombination aus einer Ausfahrspur und einer Einfahrspur gemäß einem ersten Endpunkt einer Fahrspurmittellinie der Ausfahrspur an der Kreuzung und einem zweiten Endpunkt einer Fahrspurmittellinie der Einfahrspur an der Kreuzung, eines Fahrweges, der den ersten Endpunkt mit dem zweiten Endpunkt verbindet.

9. Verfahren nach Anspruch 8, wobei das Auswählen einer Kombination aus einer Ausfahrspur und einer Einfahrspur mit einem Kommunikationsattribut an einer Kreuzung aufweist:

Bestimmen, für jede Ausfahrspur der Kreuzung, eines Suchbereichs, der der Ausfahrspur entspricht, gemäß einem Ausfahrattribut der Ausfahrspur, wobei das Ausfahrattribut mindestens eines von rechts abbiegen, links abbiegen, geradeaus fahren und 180°-Wende machen aufweist; und
Durchsuchen des Suchbereichs, der der Ausfahrspur entspricht, um eine Einfahrspur zu erhalten, die das Kommunikationsattribut relativ zur Ausfahrspur aufweist.

10. Verfahren nach Anspruch 9, wobei das Bestimmen eines Suchbereichs, der der Ausfahrspur entspricht, gemäß einem Ausfahrattribut der Ausfahrspur aufweist:

Bestimmen, wenn das Ausfahrattribut der Ausfahrspur das Rechtsabbiegen aufweist, dass ein erster rechteckiger Bereich $G_1H_1I_1J_1$ der Suchbereich ist, der der Ausfahrspur entspricht, wobei $G_1$ mit dem ersten Endpunkt zusammenfällt, $H_1$ auf einer Verlängerungslinie einer Fahrbahnmittellinie der Ausfahrspur an der Kreuzung liegt und $I_1J_1$ parallel zu $G_1H_1$ ist und auf einer Seite einer Rechtsabbiegerichtung von $G_1H_1$ liegt;
Bestimmen, wenn das Ausfahrattribut der Ausfahrspur das Linksabbiegen aufweist, dass ein zweiter rechteckiger Bereich $G_2H_2I_2J_2$ der Suchbereich ist, der der Ausfahrspur entspricht, wobei $G_2$ mit dem ersten Endpunkt zusammenfällt, $H_2$ auf einer Verlängerungslinie einer Fahrbahnmittellinie der Ausfahrspur an der Kreuzung liegt und $I_2J_2$ parallel zu $G_2H_2$ ist und auf einer Seite einer Linksabbiegerichtung von $G_2H_2$ liegt;
Bestimmen, wenn das Auszugsattribut der Ausfahrspur das Geradeausgehen aufweist, dass ein dritter rechteckiger Bereich $G_3H_3I_3J_3$ der Suchbereich ist, der der Ausfahrspur entspricht, wobei der erste Endpunkt ein Mittelpunkt von $G_3H_3$ ist und $I_3J_3$ parallel zu $G_3H_3$ ist und sich auf einer Seite einer geraden Fahrtrichtung von $G_3H_3$ befindet; oder
Bestimmen, wenn das Ausfahrattribut der Ausfahrspur das Machen einer 180°-Wende aufweist, dass ein vierter rechteckiger Bereich $G_4H_4I_4J_4$ der Suchbereich ist, der der Ausfahrspur entspricht, wobei der erste Endpunkt ein Mittelpunkt von $G_4H_4$ ist und $I_4J_4$ parallel zu $G_4H_4$ ist und sich auf einer Seite einer Linksabbiegerichtung von $G_4H_4$ befindet.

11. Verfahren nach Anspruch 9, wobei das Durchsuchen des Suchbereichs, der der Ausfahrspur entspricht, um eine Einfahrspur zu erhalten, die das Kommunikationsattribut relativ zur Ausfahrspur aufweist, aufweist:

Berechnen, für jede Einfahrspur im Suchbereich, die der Ausfahrspur entspricht, einer Richtungsdrehwinkelabweichung und einer Ortseinschlusswinkelabweichung, die der Einfahrspur entsprechen, wobei die Richtungsdrehwinkelabweichung einen Absolutwert einer Differenz zwischen einem Richtungsdrehwinkel und einem idealen Richtungsdrehwinkel angibt und die Ortseinschlusswinkelabweichung einen Absolutwert einer Differenz zwischen einem Ortseinschlusswinkel und einem idealen Ortseinschlusswinkel angibt; und
Bestimmen, falls die Richtungsdrehwinkelabweichung und die Ortseinschlusswinkelabweichung, die der Einfahrspur entsprechen, eine voreingestellte Bedingung erfüllen, dass die Einfahrspur das Kommunikationsattribut relativ zur Ausfahrspur hat.

12. Verfahren nach Anspruch 8, wobei das Bestimmen, für jede Kombination aus einer Ausfahrspur und einer Einfahrspur gemäß einem ersten Endpunkt einer Spurmittellinie der Ausfahrspur an der Kreuzung und einem zweiten Endpunkt einer Spurmittellinie der Einfahrspur an der Kreuzung, eines Fahrweges, der den ersten Endpunkt mit dem zweiten Endpunkt verbindet, aufweist:

Bestimmen von Kontrollpunkten einer zweiten Bezier-Kurve;
Bestimmen von Abtastpunkten auf der zweiten Bezier-Kurve basierend auf den Kontrollpunkten der zweiten Bezier-Kurve; und
sequentielles Verbinden der Abtastpunkte auf der zweiten Bezier-Kurve, um die zweite Bezier-Kurve zu erhalten, und Verwenden der zweiten Bezier-Kurve als den Fahrweg, der den ersten Endpunkt mit dem zweiten Endpunkt verbindet.

13. Server (112, 1200, 1400), aufweisend:

einen Prozessor (1202); und

einen Speicher (1206), der mit dem Prozessor (1202) verbunden ist, wobei der Speicher (1206) maschinenlesbare Anweisungen speichert, die von dem Prozessor (1202) auszuführen sind; und die Anweisungen, wenn sie ausgeführt werden, das Verfahren nach einem der Ansprüche 1 bis 12 durchführen.

14. Nichtflüchtiges, computerlesbares Speichermedium, das maschinenlesbare Anweisungen speichert, wobei die maschinenlesbaren Anweisungen von einem Prozessor (1202) ausgeführt werden, um das Verfahren nach einem der Ansprüche 1 bis 12 zu implementieren.

**Revendications**

1. Procédé de détermination de la ligne centrale d'une voie, comprenant :

   obtenir, par un serveur (112, 1200, 1400), une voie cible dans un premier segment de route à partir d'une base de données (110), dans lequel le premier segment de route indique un segment de route ayant un numéro de voie modifié, la voie cible indique une voie ajoutée ou soustraite, deux lignes de voie latérale de la voie cible sont respectivement connectées à deux lignes de voie latérale d'une première voie au niveau de deux points d'extrémité d'une première extrémité de la voie cible, les deux lignes de voie latérale de la voie cible se croisent au niveau d'un point d'intersection au niveau d'une deuxième extrémité de la voie cible et le point d'intersection est connecté à une ligne de voie latérale d'une deuxième voie ;
   obtenir, par le serveur (112, 1200, 1400), des informations connexes de la voie cible à partir de la base de données (110), dans lequel les informations connexes comprennent des emplacements des deux points d'extrémité de la première extrémité de la voie cible, un emplacement du point d'intersection à la deuxième extrémité de la voie cible, et un emplacement d'un point central de voie d'une voie voisine de la voie cible ;
   déterminer, par le serveur (112, 1200, 1400) pour la première extrémité de la voie cible, un point médian des deux points d'extrémité de la première extrémité de la voie cible, en tant que point d'extrémité central de la première extrémité de la voie cible ;
   déterminer, par le serveur (112, 1200, 1400) pour la deuxième extrémité de la voie cible, le point central de voie de la voie voisine de la voie cible comme point d'extrémité central de la deuxième extrémité de la voie cible, dans lequel le point central de voie de la voie voisine indique un point médian entre le point d'intersection et un point de cartographie du point d'intersection, le point d'intersection et le point de cartographie du point d'intersection sont respectivement situés sur deux lignes de voie latérales de la voie voisine, et une ligne de connexion entre le point d'intersection et le point de cartographie du point d'intersection est perpendiculaire à une direction de déplacement de la voie voisine ;
   déterminer, par le serveur (112, 1200, 1400), une ligne centrale de voie de la voie cible en utilisant le point d'extrémité central de la première extrémité de la voie cible et le point d'extrémité central de la deuxième extrémité de la voie cible comme deux points d'extrémité de la ligne centrale de voie de la voie cible ; et
   stocker des informations des deux points d'extrémité de la ligne centrale de voie déterminée et de la voie cible dans la base de données (110).

2. Procédé selon la revendication 1, dans lequel déterminer d'une ligne centrale de voie de la voie cible en utilisant le point d'extrémité central de la première extrémité de la voie cible et le point d'extrémité central de la deuxième extrémité de la voie cible comme deux points d'extrémité de la ligne centrale de voie de la voie cible comprend :

   déterminer les points de contrôle d'une première courbe de Bézier ;
   déterminer des points d'échantillonnage sur la première courbe de Bézier sur la base des points de contrôle de la première courbe de Bézier ; et
   connecter séquentiellement les points d'échantillonnage sur la première courbe de Bézier pour obtenir la première courbe de Bézier, et utiliser la première courbe de Bézier comme ligne centrale de voie de la voie cible.

3. Procédé selon la revendication 1, dans lequel la voie voisine de la voie cible comprend une première voie voisine et une deuxième voie voisine,
   et dans lequel déterminer, pour la deuxième extrémité de la voie cible, du point central de la voie voisine de la voie cible en tant que point d'extrémité central de la deuxième extrémité de la voie cible comprend :

   obtenir un point central de voie de la première voie voisine et un point central de voie de la deuxième voie voisine ;
   déterminer, si une première distance est inférieure à une deuxième distance, le point central de voie de la première voie voisine comme point d'extrémité central de la deuxième extrémité de la voie cible ;

déterminer, si la première distance est supérieure à la deuxième distance, le point central de la deuxième voie voisine comme point d'extrémité central de la deuxième extrémité de la voie cible ; ou

déterminer, si la première distance est égale à la deuxième distance, le point central de la première voie voisine ou le point central de la deuxième voie voisine comme point d'extrémité central de la deuxième extrémité de la voie cible,

dans lequel la première distance indique une distance entre le point d'extrémité central de la première extrémité de la voie cible et le point central de la voie de la première voie voisine, et la deuxième distance indique une distance entre le point d'extrémité central de la première extrémité de la voie cible et le point central de la voie de la deuxième voie voisine.

4. Procédé selon la revendication 1, dans lequel obtenir d'une voie cible dans un premier segment de route comprend :

déterminer, s'il y a une ligne de voie dans le premier segment de route, la voie cible sur la base de la ligne de voie dans le premier segment de route ; ou

compléter, si une ligne de voie est absente dans le premier segment de route, la ligne de voie absente dans le premier segment de route sur la base des lignes de voie de deux segments de route voisins latéraux connectés au premier segment de route, et déterminer la voie cible sur la base de la ligne de voie dans le premier segment de route.

5. Procédé selon la revendication 4, dans lequel compléter de la ligne de voie absente dans le premier segment de route sur la base des lignes de voie de deux segments de route voisins latéraux connectés au premier segment de route comprend :

déterminer un premier point d'extrémité de ligne de voie, dans lequel le premier point d'extrémité de ligne de voie indique un point d'extrémité d'une ligne de voie dans un premier segment de route voisin proche du premier segment de route ;

déterminer un deuxième point d'extrémité de ligne de voie, dans lequel le deuxième point d'extrémité de ligne indique un point d'extrémité d'une ligne de voie dans un deuxième segment de route voisin proche du premier segment de route ;

sélectionner, pour tout premier point d'extrémité de ligne de voie, un deuxième point d'extrémité de ligne de voie à une distance la plus courte du premier point d'extrémité de ligne de voie si une ligne de voie connectée au premier point d'extrémité de ligne de voie est absente du premier segment de route, et connecter le premier point d'extrémité de ligne de voie au deuxième point d'extrémité de ligne de voie sélectionné pour former une ligne de voie,

dans lequel le nombre de voies du premier segment de route voisin est supérieur au nombre de voies du deuxième segment de route voisin.

6. Procédé selon la revendication 1, comprenant en outre :

déterminer une voie non ciblée, dans laquelle la voie non ciblée indique une voie autre que la voie ciblée dans le premier segment de route et toute voie dans le deuxième segment de route ; et

utiliser, pour toute voie non ciblée, une ligne centrale de deux lignes de voies latérales de la voie non ciblée comme ligne centrale de voie de la voie non ciblée.

7. Procédé selon la revendication 6, dans lequel l'utilisation, pour toute voie non ciblée, d'une ligne centrale de deux lignes de voies latérales de la voie non ciblée comme ligne centrale de voie de la voie non ciblée comprend :

obtenir, pour toute voie non ciblée, au moins deux groupes de points d'échantillonnage sur les deux lignes de voie latérales de la voie non ciblée, dans lequel chacun des au moins deux groupes de points d'échantillonnage comprend un premier point d'échantillonnage et un deuxième point d'échantillonnage, chacun du premier point d'échantillonnage et du deuxième point d'échantillonnage est situé sur l'une des deux lignes de voie de la voie non ciblée, et une ligne de connexion entre le premier point d'échantillonnage et le deuxième point d'échantillonnage est perpendiculaire à une direction de déplacement de la voie non ciblée ;

obtenir un point médian entre le premier point d'échantillonnage et le deuxième point d'échantillonnage ; et

connecter séquentiellement les points médians entre les groupes de points d'échantillonnage, pour obtenir la ligne centrale de la voie non ciblée.

8. Procédé selon l'une quelconque des revendications 1 à 7, comprenant en outre :

sélectionner une combinaison d'une voie de sortie et d'une voie d'entrée ayant un attribut de communication à une intersection, dans laquelle l'attribut de communication est un attribut selon lequel un véhicule entre dans l'intersection à partir de la voie de sortie et entre dans la voie d'entrée à travers l'intersection ; et

déterminer, pour chaque combinaison d'une voie de sortie et d'une voie d'entrée selon un premier point d'extrémité d'une ligne centrale de voie de la voie de sortie à l'intersection et un deuxième point d'extrémité d'une ligne centrale de voie de la voie d'entrée à l'intersection, un trajet de déplacement connecter le premier point d'extrémité au deuxième point d'extrémité.

9. Procédé selon la revendication 8, dans lequel la sélectionner une combinaison d'une voie de sortie et d'une voie d'entrée ayant un attribut de communication à une intersection comprend :

déterminer, pour chaque voie de sortie de l'intersection, une zone de recherche correspondant à la voie de sortie en fonction d'un attribut de sortie de la voie de sortie, dans laquelle l'attribut de sortie comprend au moins l'un des éléments suivants : tourner à droite, tourner à gauche, aller tout droit et faire demi-tour ; et

rechercher la zone de recherche correspondant à la voie de sortie pour obtenir une voie d'entrée ayant l'attribut de communication par rapport à la voie de sortie.

10. Procédé selon la revendication 9, dans lequel déterminer une zone de recherche correspondant à la voie de sortie en fonction d'un attribut de sortie de la voie de sortie comprend :

déterminer, si l'attribut de sortie de la voie de sortie comprend le virage à droite, qu'une première zone rectangulaire $G_1H_1I_1J_1$ est la zone de recherche correspondant à la voie de sortie, dans laquelle $G_1$ coïncide avec le premier point d'extrémité, $H_1$ est situé sur une ligne d'extension d'une ligne centrale de voie de la voie de sortie à l'intersection, et $I_1J_1$ est parallèle à $G_1H_1$ et est situé sur un côté d'une direction de virage à droite de $G_1H_1$ ;

déterminer, si l'attribut de sortie de la voie de sortie comprend le virage à gauche, qu'une deuxième zone rectangulaire $G_2H_2I_2J_2$ est la zone de recherche correspondant à la voie de sortie, dans laquelle $G_2$ coïncide avec le premier point d'extrémité, $H_2$ est situé sur une ligne d'extension d'une ligne centrale de voie de la voie de sortie à l'intersection, et $I_2J_2$ est parallèle à $G_2H_2$ et est situé sur un côté d'une direction de virage à gauche de $G_2H_2$ ;

déterminer, si l'attribut d'extraction de la voie d'extraction comprend la marche en ligne droite, qu'une troisième zone rectangulaire $G_3H_3I_3J_3$ est la zone de recherche correspondant à la voie d'extraction, dans laquelle le premier point d'extrémité est un point central de $G_3H_3$, et $I_3J_3$ est parallèle à $G_3H_3$ et est situé sur un côté d'une direction de marche en ligne droite de $G_3H_3$ ; ou

déterminer, si l'attribut de sortie de la voie de sortie comprend la réalisation d'un demi-tour, qu'une quatrième zone rectangulaire $G_4H_4I_4J_4$ est la zone de recherche correspondant à la voie de sortie, dans laquelle le premier point d'extrémité est un point central de $G_4H_4$, et $I_4J_4$ est parallèle à $G_4H_4$ et est situé sur un côté d'une direction de virage à gauche de $G_4H_4$.

11. Procédé selon la revendication 9, dans lequel rechercher la zone de recherche correspondant à la voie de sortie pour obtenir une voie d'entrée ayant l'attribut de communication par rapport à la voie de sortie comprend :

calculer, pour chaque voie d'entrée dans la zone de recherche correspondant à la voie de sortie, un écart d'angle de rotation de direction et un écart d'angle inclus dans l'emplacement qui correspondent à la voie d'entrée, dans lequel l'écart d'angle de rotation de direction indique une valeur absolue d'une différence entre un angle de rotation de direction et un angle de rotation de direction idéal, et l'écart d'angle inclus dans l'emplacement indique une valeur absolue d'une différence entre un angle inclus dans l'emplacement et un angle inclus dans l'emplacement idéal ; et

déterminer, si l'écart d'angle de rotation de la direction et l'écart d'angle inclus de l'emplacement qui correspondent à la voie d'entrée satisfont une condition prédéfinie, que la voie d'entrée a l'attribut de communication par rapport à la voie de sortie.

12. Procédé selon la revendication 8, dans lequel déterminer, pour chaque combinaison d'une voie de sortie et d'une voie d'entrée selon un premier point d'extrémité d'un axe de voie de la voie de sortie à l'intersection et un deuxième point d'extrémité d'un axe de voie de la voie d'entrée à l'intersection, un trajet de déplacement connecter le premier point d'extrémité au deuxième point d'extrémité comprend :

déterminer les points de contrôle d'une deuxième courbe de Bézier ;

déterminer des points d'échantillonnage sur la deuxième courbe de Bézier sur la base des points de contrôle de la deuxième courbe de Bézier ; et

connecter séquentiellement les points d'échantillonnage sur la deuxième courbe de Bézier pour obtenir la deuxième courbe de Bézier, et utiliser la deuxième courbe de Bézier comme chemin de déplacement reliant le premier point d'extrémité au deuxième point d'extrémité.

13. Un serveur (112, 1200, 1400), comprenant :

un processeur (1202) ; et
une mémoire (1206) connectée au processeur (1202), dans laquelle la mémoire (1206) stocke des instructions lisibles par machine devant être exécutées par le processeur (1202) ; et les instructions, lorsqu'elles sont exécutées, exécutent le procédé selon l'une quelconque des revendications 1 à 12.

14. Support de stockage non volatile lisible par ordinateur stockant des instructions lisibles par machine, dans lequel les instructions lisibles par machine sont exécutées par un processeur (1202) pour mettre en œuvre le procédé selon l'une quelconque des revendications 1 à 12.

11

C

D

A

B

Road segment C

Road segment B

Road segment A

FIG. 1A

Server 112

Database 110

Network 106

104

Navigation application

108

FIG. 1B

A server obtains, from a database, a target lane in a first road segment and related information of the target lane — 201

Determine, for the first end of the target lane, a midpoint of the two endpoints of the first end of the target lane as a center endpoint of the first end of the target lane — 202

Determine, for the second end of the target lane, the lane center point of the neighboring lane of the target lane as a center endpoint of the second end of the target lane — 203

Obtain a lane center point of the first neighboring lane and a lane center point of the second neighboring lane — 203a

Determine, if a first distance is less than a second distance, the lane center point of the first neighboring lane as the center endpoint of the second end of the target lane — 203b

Determine, if a first distance is greater than a second distance, the lane center point of the second neighboring lane as the center endpoint of the second end of the target lane — 203c

Determine, if a first distance is equal to a second distance, the lane center point of the first neighboring lane or the lane center point of the second neighboring lane as the center endpoint of the second end of the target lane — 203d

Determine a lane center line of the target lane by using the center endpoint of the first end of the target lane and the center endpoint of the second end of the target lane as two endpoints of the lane center line of the target lane — 204

Determine control points of a first Bezier curve — 204a

Determine sampling points on the first Bezier curve according to the control points of the first Bezier curve — 204b

Sequentially connect the sampling points on the first Bezier curve to obtain the first Bezier curve, and use the first Bezier curve as the lane center line of the target lane — 204c

The server stores information of the two endpoints of the determined lane center line and the target lane in the database — 205

FIG. 2

FIG. 3

FIG. 4

51

52

53

$P_1$

$P_0(A_1)$

$A_2$

$A_3$

$B_2$

$B_3$  $P_3(B_1)$

$P_2$

A'

34

| Road segment C | Road segment B | Road segment A |

FIG. 5

601

Obtain, for any non-target lane, at least two groups of sampling points on two side lane lines of the non-target lane

602

Obtain a midpoint between the first sampling point and the second sampling point

603

Sequentially connect midpoints between the groups of sampling points, to obtain the lane center line of the non-target lane

FIG. 6

FIG. 7

Select a combination of a pull-out lane and a pull-in lane having a communication attribute at an intersection
— 801

Determine, for each pull-out lane of the intersection, a search area corresponding to the pull-out lane according to a pull-out attribute of the pull-out lane
— 801a

Search the search area corresponding to the pull-out lane to obtain a pull-in lane having the communication attribute relative to the pull-out lane
— 801b

Calculate, for each pull-in lane in the search area corresponding to the pull-out lane, a direction rotation angle deviation and a location included angle deviation that correspond to the pull-in lane
— 801b1

Determine, if the direction rotation angle deviation and the location included angle deviation that correspond to the pull-in lane satisfy a preset condition, that the pull-in lane has the communication attribute relative to the pull-out lane
— 801b2

Determine, for each combination of a pull-out lane and a pull-in lane and according to a first endpoint of a lane center line of the pull-out lane at the intersection and a second endpoint of a lane center line of the pull-in lane at the intersection, a travelling path connecting the first endpoint to the second endpoint
— 802

Determine control points of a second Bezier curve
— 802a

Determine sampling points on the second Bezier curve according to the control points of the second Bezier curve
— 802b

Sequentially connect the sampling points on the second Bezier curve to obtain the second Bezier curve, and use the second Bezier curve as the travelling path connecting the first endpoint to the second endpoint
— 802c

FIG. 8

FIG. 9

FIG. 10

101

$D_2$ $D_3$ $Q_0(D_1)$ $Q_1$

$Q_2$

$Q_3(E_1)$

$E_3$

102

$E_2$

FIG. 11

A server receives location information sent by user equipment, and obtains navigation data of a road segment corresponding to the location information from a database according to the location information, the navigation data including information of a lane center line of a target lane in the road segment; and the number of lanes in the road segment changes, the target lane being an added or subtracted lane, and the lane center line of the target lane in the road segment being determined by the server according to the foregoing method

S1201

Return the navigation data of the road segment to the user equipment

S1202

FIG. 12A

**Server 1200**

1204

1202

Network interface

Memory 1206

Processor

Receiving module 1217

Sending module 1218

1208

Output device 1212

Input device 1214

FIG. 12B

Obtaining module 1301

Lane obtaining unit 1311

Lane line supplementing unit 1312

Second determining module 1303

First determining module 1302

Lane center point obtaining unit 1321

Center endpoint determining unit 1322

Third determining module 1304

First determining unit 1341

Second determining unit 1342

Third determining unit 1343

Fourth determining module 1305

Sampling point obtaining unit 1351

Midpoint obtaining unit 1352

Midpoint connection unit 1353

Combination selection module 1306

Area determining unit 1361

Lane search unit 1362

Path determining module 1307

Fourth determining unit 1371

Fifth determining unit 1372

Sixth determining unit 1373

FIG. 13

<u>1400</u>

1412

Network

1406

1408

Display

1409

Input device

1401

Central processing
unit

1411

Network interface
unit

Input/output controller
1410

1405

System bus

1404

1402

Random access
memory

Read-only
memory

System memory 1403

1407

1413

Operating system

1414

Application
program

Large-capacity
storage device

1415

Another program
module

FIG. 14

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201710209738

- US 2010312527 A1

**Non-patent literature cited in the description**

- **E.UDUWARAGODA et al.** Generating lane level road data from vehicle trajectories using Kernel Density Estimation. *16TH INTERNATIONAL IEEE CONFERENCE ON INTELLIGENT TRANSPORTATION SYSTEMS (ITSC 2013),* 09 October 2013